# EUROPEAN PATENT APPLICATION

(11) **EP 4 844 880 A1**
(43) Date of publication of application: **25.11.2026**
(21) Application number: 24918924.2
(22) Date of filing: 05.08.2024
(51) Int. Cl.: H01M 10/0585, H01M 10/42, H01M 50/446, H01M 50/431, H01M 50/491, H01M 4/525, H01M 4/58, H01M 4/62, H01M 4/583

(54) **ALL-SOLID SECONDARY BATTERY**

(30) Priority: 18.01.2024 KR 20240008297
(71) Applicant: SAMSUNG SDI CO., LTD., Yongin-si, Gyeonggi-do 17084 (KR)
(72) Inventor: SON, In Hyuk, Yongin-Si Gyeonggi-do 17084 (KR); JO, Sung Nim, Yongin-Si Gyeonggi-do 17084 (KR); SHIM, Kyu Eun, Yongin-Si Gyeonggi-do 17084 (KR); LIM, Hyung Sub, Yongin-Si Gyeonggi-do 17084 (KR); PARK, Tae Hyun, Yongin-Si Gyeonggi-do 17084 (KR); LEE, Ji Eun, Yongin-Si Gyeonggi-do 17084 (KR); YUN, Jong Hyuk, Yongin-Si Gyeonggi-do 17084 (KR)
(74) Representative: Meissner Bolte Partnerschaft mbB
(86) International application number: PCT/KR2024/011547
(87) International publication number: WO 2025/154890

(57) **Abstract**

Provided is an all-solid-state secondary battery including: a positive electrode layer; an negative electrode layer; a solid electrolyte layer between the positive electrode layer and the negative electrode layer; and a solid separator disposed in one or more of between the positive electrode layer and the solid electrolyte layer and between the negative electrode layer and the solid electrolyte layer, wherein the positive electrode layer includes: a positive electrode current collector; and a positive electrode active material layer on one side or both sides of the positive electrode current collector, the positive electrode active material layer includes a positive electrode active material and a first solid electrolyte, the solid separator includes a porous membrane and an inorganic filler, the inorganic filler includes a lithium metal oxyhalide represented by LiₐM_{b}O_{c}Cl_{d} (0<a≤3; 0<b≤3; 0<c≤3; 0<d≤8; c<d; a/(a+b+c+d)<0.5, wherein M is a metal selected from Group 3 to Group 15 of the periodic table of elements), and the negative electrode layer includes a negative electrode current collector and a first negative electrode active material layer on one side of the negative electrode current collector.

## Description

### Technical Field

The present disclosure relates to an all-solid-state secondary battery.

### Background Art

Recently, due to industrial demand, there has been active development of batteries having high energy density and safety. For example, lithium batteries are used for various applications such as information devices, communication devices, and automobiles. Since automobiles have an impact on human lives, safety is also important.

In lithium batteries employing a liquid electrolyte, the likelihood of fire and/or explosion may increase upon a short circuit. All-solid-state secondary batteries employing a solid electrolyte instead of a liquid electrolyte have been proposed. A solid electrolyte has a lower possibility of ignition than a liquid electrolyte.

By employing a solid electrolyte instead of a liquid electrolyte, an all-solid-state secondary battery may have a reduced likelihood of fire or explosion. All-solid-state secondary batteries may provide improved safety.

### Disclosure of Invention

### Technical Problem

One aspect is to provide an all-solid secondary battery having improved safety and charge/discharge characteristics by including a solid separator having a new structure.

### Solution to Problem

According to an embodiment,
there is provided an all-solid secondary battery including:
   a positive electrode layer; a negative electrode layer; a solid electrolyte layer between the positive electrode layer and the negative electrode layer; and
a solid separator disposed in one or more of between the positive electrode layer and the solid electrolyte layer and between the negative electrode layer and the solid electrolyte layer,
wherein the positive electrode layer includes a positive electrode current collector; and a positive electrode active material layer on one surface or both surfaces of the positive electrode current collector,
wherein the positive electrode active material layer includes a positive electrode active material and a first solid electrolyte,
wherein the solid separator includes a porous membrane and an inorganic filler,
wherein the inorganic filler includes a lithium metal oxyhalide represented by LiₐM_{b}O_{c}Cl_{d} (0<a≤3; 0<b≤3; 0<c≤3; 0<d≤8; c<d; a/(a+b+c+d)<0.5, and M is a metal selected from Group 3 to Group 15 of the periodic table of elements),
wherein the negative electrode layer includes a negative electrode current collector and a first negative electrode active material layer on one surface of the negative electrode current collector.

According to another embodiment,
there is provided an all-solid secondary battery including:
   a positive electrode layer; a negative electrode layer; a solid electrolyte layer between the positive electrode layer and the negative electrode layer; and
a solid separator disposed in one or more of between the positive electrode layer and the solid electrolyte layer and between the negative electrode layer and the solid electrolyte layer,
wherein the solid separator includes a porous membrane and an inorganic filler,
wherein the inorganic filler includes a lithium metal oxyhalide represented by LiₐM_{b}O_{c}Cl_{d} (0<a≤3; 0<b≤3; 0<c≤3; 0<d≤8; c<d; a/(a+b+c+d)<0.5, and M is a metal selected from Group 3 to Group 15 of the periodic table of elements).

### Advantageous Effects of Invention

According to an aspect, it is possible to provide an all-solid secondary battery having improved safety and charge/discharge characteristics by including a solid separator capable of preventing short circuit at high temperature and accommodating volume change during charging/discharging.

### Brief Description of Drawings

FIG. 1 is a cross-sectional diagram of an all-solid-state secondary battery according to an example embodiment.
FIG. 2 is a cross-sectional diagram of an all-solid-state secondary battery according to an example embodiment.
FIG. 3 is a cross-sectional diagram of an all-solid-state secondary battery according to an example embodiment.
FIG. 4 is a cross-sectional diagram of an all-solid-state secondary battery according to an example embodiment.
FIG. 5 is a cross-sectional diagram of an all-solid-state secondary battery according to an example embodiment.
FIG. 6 is a cross-sectional diagram of an all-solid-state secondary battery according to an example embodiment.
FIG. 7 is a cross-sectional diagram of an all-solid-state secondary battery according to an example embodiment.
FIG. 8 is a cross-sectional diagram of an all-solid-state secondary battery according to an example embodiment.
FIG. 9 is a cross-sectional diagram of an all-solid-state secondary battery according to an example embodiment.
FIG. 10 is a cross-sectional diagram of an all-solid-state secondary battery according to an example embodiment.
FIG. 11 is a cross-sectional diagram of an all-solid-state secondary battery according to an example embodiment.
FIG. 12 is a cross-sectional diagram of an all-solid-state secondary battery according to an example embodiment.

### Best Mode for Carrying out the Invention

Unless otherwise defined, all terms (including technical and scientific terms) used herein have the same meaning as commonly understood by a person of ordinary skill in the art to which the present disclosure pertains. In addition, terms, such as those defined in generally used dictionaries, should be interpreted as having meanings consistent with their meanings in the context of the related art and the present disclosure, and should not be interpreted in an idealized or overly formal sense.

Example embodiments are described herein with reference to cross-sectional diagrams that are schematic illustrations of idealized embodiments. As such, variations from the illustrated shapes are to be expected as a result of, for example, manufacturing techniques and/or tolerances. Accordingly, the embodiments described herein should not be construed as limited to the particular shapes of regions as illustrated herein, and should include deviations in shapes resulting from manufacturing. For example, a region illustrated or described as flat may typically have rough and/or non-linear features. Moreover, sharply illustrated angles may be rounded. Thus, the regions illustrated in the drawings are schematic in nature, and their shapes are not intended to illustrate the precise shape of a region and are not intended to limit the scope of the claims.

The creative idea may be embodied in many different forms and should not be construed as being limited to the embodiments set forth herein. The embodiments are provided so that the present disclosure may be thorough and complete, and are provided to fully convey the scope of the creative idea to those of ordinary skill in the art. Like reference numerals refer to like elements.

When a component is referred to as being "on" another component, it may be directly on the other component or intervening components may also be disposed therebetween. In contrast, when a component is referred to as being "directly on" another component, there are no intervening components therebetween.

Terms such as "first", "second", and "third" may be used herein to describe various components, constituents, regions, layers, and/or sections, but these components, constituents, regions, layers, and/or sections should not be limited by these terms. These terms are only used to distinguish one component, constituent, region, layer, or section from another component, constituent, region, layer, or section. Accordingly, a first component, constituent, region, layer, or section described below may be referred to as a second component, constituent, region, layer, or section without departing from the teachings of the present disclosure.

The terminology used herein is for the purpose of describing particular embodiments only and is not intended to limit the creative idea. As used herein, singular forms are intended to include plural forms including "at least one" unless the context clearly indicates otherwise. "At least one" should not be construed as limiting to the singular form. As used herein, the term "and/or" includes any and all combinations of one or more of the associated listed items. As used herein, the terms "include" and/or "including" specify the presence of stated features, regions, integers, steps, operations, elements, and/or components, but do not preclude the presence or addition of one or more other features, regions, integers, steps, operations, elements, components, and/or groups thereof.

Spatially relative terms such as "beneath", "below", "lower", "above", "upper", and the like may be used herein to facilitate description of the relationship of one element or feature to another element or feature. It will be understood that the spatially relative terms are intended to encompass different orientations of the device in use or operation in addition to the orientation depicted in the drawings. For example, if the device in the drawings is turned over, an element described as being "beneath" or "below" another element or feature would then be oriented "above" the other element or feature. Thus, the example term "below" may encompass both orientations of above and below. The device may be otherwise oriented (may be rotated by 90 degrees or rotated in another orientation), and the spatially relative terms used herein may be interpreted accordingly.

"Group" refers to a group of the periodic table of elements according to the International Union of Pure and Applied Chemistry ("IUPAC") Groups 1-18 classification system.

As used herein, "particle diameter" refers to an average diameter when particles are spherical, and refers to an average major axis length when particles are non-spherical. The particle diameter may be measured using a particle size analyzer (PSA). The "particle diameter" is, for example, an average particle diameter. The "average particle diameter" is, for example, D50, which is a median particle diameter.

D50 is a particle size corresponding to a cumulative volume of 50 %, calculated from particles having a small particle size in a particle size distribution measured by a laser diffraction method.

D90 is a particle size corresponding to a cumulative volume of 90 %, calculated from particles having a small particle size in a particle size distribution measured by a laser diffraction method.

D10 is a particle size corresponding to a cumulative volume of 10 %, calculated from particles having a small particle size in a particle size distribution measured by a laser diffraction method.

As used herein, the "weight average molecular weight" of a polymer may be measured using, for example, gel permeation chromatography (GPC), and is a relative value with respect to a polystyrene standard sample.

As used herein, "metal" includes both metals and metalloids such as silicon and germanium, in an elemental state or an ionic state.

As used herein, "alloy" refers to a mixture of two or more metals.

As used herein, "electrode active material" refers to an electrode material capable of undergoing lithiation and delithiation.

As used herein, "positive electrode active material" refers to a positive electrode material capable of undergoing lithiation and delithiation.

As used herein, "negative electrode active material" refers to a negative electrode material capable of undergoing lithiation and delithiation.

As used herein, "lithiation" and "lithiate" refer to a process of adding lithium to an electrode active material.

As used herein, "delithiation" and "delithiate" refer to a process of removing lithium from an electrode active material.

As used herein, "charge" and "charging" refer to a process of providing electrochemical energy to a battery.

As used herein, "discharge" and "discharging" refer to a process of removing electrochemical energy from a battery.

As used herein, "positive electrode" and "positive electrode" refer to an electrode in which electrochemical reduction and lithiation occur during a discharge process.

As used herein, "negative electrode" and "negative electrode" refer to an electrode in which electrochemical oxidation and delithiation occur during a discharge process.

Although particular embodiments have been described, alternatives, modifications, variations, improvements, and substantial equivalents that are currently unforeseen or unforeseeable may occur to applicants or a person of ordinary skill in the art. Accordingly, the appended claims as filed and as may be amended are intended to embrace all such alternatives, modifications, variations, improvements, and substantial equivalents.

Hereinafter, all-solid secondary batteries according to example embodiments will be described in further detail.

### [All-Solid Secondary Battery]

An all-solid secondary battery according to an embodiment includes a positive electrode layer; a negative electrode layer; a solid electrolyte layer between the positive electrode layer and the negative electrode layer; and a solid separator disposed in one or more of between the positive electrode layer and the solid electrolyte layer and between the negative electrode layer and the solid electrolyte layer. The positive electrode layer includes a positive electrode current collector; and a positive electrode active material layer on one surface or both surfaces of the positive electrode current collector. The positive electrode active material layer includes a positive electrode active material and a first solid electrolyte. The solid separator includes a porous membrane and an inorganic filler. The inorganic filler includes a lithium metal oxyhalide represented by LiₐM_{b}O_{c}Cl_{d} (0<a≤3; 0<b≤3; 0<c≤3; 0<d≤8; c<d; a/(a+b+c+d)<0.5, and M is a metal selected from Group 3 to Group 15 of the periodic table of elements). The negative electrode layer includes a negative electrode current collector and a first negative electrode active material layer on one surface of the negative electrode current collector.

Since the all-solid secondary battery includes the solid separator, short circuit, thermal runaway, ignition, and the like of the all-solid secondary battery may be prevented by shutdown of the solid separator at high temperature. As a result, thermal stability and high temperature safety of the all-solid secondary battery may be improved.

Since the all-solid secondary battery includes the solid separator, the increase in internal resistance of the all-solid secondary battery may be suppressed by the solid separator effectively accommodating volume change of the all-solid secondary battery during a charging/discharging process. As a result, degradation of the all-solid secondary battery may be prevented, and charge/discharge characteristics of the all-solid secondary battery may be improved.

Since the solid separator has a low elastic modulus, electrical disconnection and/or ionic disconnection inside the all-solid secondary battery may be effectively prevented despite volume change of the all-solid secondary battery while accommodating the volume change of the all-solid secondary battery during charging/discharging. Increase in internal resistance of the all-solid secondary battery during charging/discharging, for example, increase in interfacial resistance between the solid electrolyte layer and the positive electrode layer and/or the negative electrode layer, may be effectively suppressed. As a result, degradation of the all-solid secondary battery may be suppressed and charge/discharge characteristics may be improved.

Since the solid separator includes the inorganic filler and the inorganic filler has ionic conductivity, the solid separator may simultaneously provide flexibility and ionic conductivity. Since the solid separator provides an excellent ion conduction network, increase in internal resistance of the all-solid secondary battery may be effectively suppressed. As a result, charge/discharge characteristics of the all-solid secondary battery may be improved.

Since the solid separator is disposed between the positive electrode layer and/or the negative electrode layer and the solid electrolyte layer, growth of lithium dendrites precipitated between the solid electrolyte layer and the positive electrode layer and/or the negative electrode layer during the charging/discharging process of the all-solid secondary battery may be more effectively prevented. Accordingly, degradation such as cracking of the solid electrolyte layer due to growth of lithium dendrites may be more effectively prevented. As a result, charge/discharge characteristics of the all-solid secondary battery may be further improved.

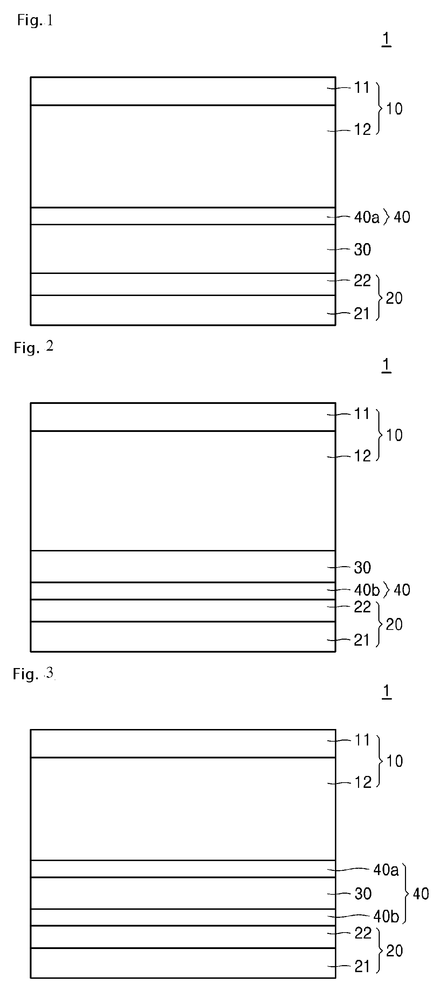

Referring to FIGS. 1 to 12, the all-solid secondary battery 1 includes a positive electrode layer 10; a negative electrode layer 20; a solid electrolyte layer 30 between the positive electrode layer 10 and the negative electrode layer 20; and a solid separator 40 disposed in one or more of between the positive electrode layer 10 and the solid electrolyte layer 30 and between the negative electrode layer 20 and the solid electrolyte layer 30. The positive electrode layer 10 includes a positive electrode current collector 11 and a positive electrode active material layer 12 on one surface or both surfaces of the positive electrode current collector 11. The positive electrode active material layer 12 includes a positive electrode active material and a first solid electrolyte. The solid separator 40 includes a porous membrane and an inorganic filler. The inorganic filler includes a lithium metal oxyhalide represented by LiₐM_{b}O_{c}Cl_{d} (0<a≤3; 0<b≤3; 0<c≤3; 0<d≤8; c<d; a/(a+b+c+d)<0.5, and M is a metal selected from Group 3 to Group 15 of the periodic table of elements). The negative electrode layer 20 includes a negative electrode current collector 21 and a first negative electrode active material layer 22 on one surface of the negative electrode current collector 21.

### [Solid Separator]

Referring to FIG. 1 to FIG. 12, the all-solid secondary battery 1 includes a solid separator 40 disposed in one or more of between the positive electrode layer 10 and the solid electrolyte layer 30 and between the negative electrode layer 20 and the solid electrolyte layer 30.

Since the all-solid secondary battery 1 includes the solid separator 40, high temperature safety/thermal stability of the all-solid secondary battery 1 is improved and charge/discharge characteristics are improved.

The solid separator 40 may be liquid at, for example, 120 °C or higher, 125 °C or higher, 130 °C or higher, 135 °C or higher, 140 °C or higher, 145 °C or higher, 150 °C or higher, 155 °C or higher, 160 °C or higher, 170 °C or higher, 180 °C or higher, or 200 °C or higher. The solid separator 40 may be solid at, for example, 100 °C or lower, 80 °C or lower, 70 °C or lower, 60 °C or lower, or 50 °C or lower. The solid separator 40 is solid at room temperature. The solid separator 40 includes a porous membrane and an inorganic filler, and the porous membrane and the inorganic filler are melted at high temperature. Since the porous membrane 40 is melted at high temperature to block pores and insulate between the positive electrode layer 10/negative electrode layer 20 and the solid electrolyte layer 40, the solid separator 40 may effectively prevent short circuit, thermal runaway, ignition, and the like of the all-solid secondary battery 1 at high temperature.

### [Solid Separator: Porous Membrane]

Referring to FIG. 1 to FIG. 12, the solid separator 40, 40a, and 40b include a porous membrane.

A shutdown temperature of the porous membrane may be 100 °C or higher, 105 °C or higher, 110 °C or higher, 115 °C or higher, 120 °C or higher, 125 °C or higher, 130 °C or higher, 135 °C or higher, 140 °C or higher, 145 °C or higher, 150 °C or higher, 155 °C or higher, or 160 °C or higher. Since the porous membrane has a shutdown temperature within these ranges, short circuit, thermal runaway, ignition, and the like of the all-solid secondary battery 1 may be effectively prevented. Accordingly, high temperature safety of the all-solid secondary battery 1 may be further improved. The shutdown temperature may be measured according to, for example, the method described in Evaluation Example 1.

A melting point (Tm) of the porous membrane may be, for example, 120 °C or higher, 125 °C or higher, 130 °C or higher, 135 °C or higher, 140 °C or higher, 145 °C or higher, 150 °C or higher, 155 °C or higher, 160 °C or higher, 170 °C or higher, 180 °C or higher, or 200 °C or higher. Since the porous membrane has a melting point within these ranges, short circuit, thermal runaway, ignition, and the like of the all-solid secondary battery 1 may be effectively prevented. Accordingly, high temperature safety of the all-solid secondary battery 1 may be further improved. The melting point may be measured using, for example, a Differential Scanning Calorimeter (DSC).

The porous membrane may be, for example, a flexible porous membrane. Since the porous membrane is a flexible porous membrane, increase in interfacial resistance inside the all-solid secondary battery 1 may be more effectively suppressed while effectively accommodating volume change of the all-solid secondary battery 1 during charging/discharging of the all-solid secondary battery 1.

The porous membrane may include, for example, a polyolefin. The polyolefin has an excellent short circuit prevention effect and may also improve stability of the all-solid secondary battery 1 by a shutdown effect. For example, the porous membrane may be a membrane formed of a resin such as a polyolefin including polyethylene, polypropylene, polybutene, polyvinyl chloride, and mixtures or copolymers thereof, but is not necessarily limited thereto, and any porous membrane that may be used in the art may be used. For example, a porous membrane formed of a polyolefin-based resin; a porous membrane formed by weaving polyolefin-based fibers; a nonwoven fabric including a polyolefin; an aggregate of insulating material particles; and the like may be used. For example, a porous membrane including a polyolefin has excellent coatability of a binder solution for preparing a coating layer formed on the porous membrane, and may increase a ratio of the electrode active material in the all-solid secondary battery 1 by reducing thickness of the composite membrane, thereby increasing capacity per unit volume.

The polyolefin may be, for example, a homopolymer, a copolymer, or a mixture thereof, such as polyethylene and polypropylene. The polyethylene may be low-density polyethylene, medium-density polyethylene, or high-density polyethylene, and high-density polyethylene may be used from the viewpoint of mechanical strength. In addition, two or more types of polyethylene may be mixed for the purpose of imparting flexibility. A polymerization catalyst used for preparation of polyethylene is not particularly limited, and a Ziegler-Natta catalyst, a Phillips catalyst, a metallocene catalyst, or the like may be used. From the viewpoint of achieving both mechanical strength and high permeability, a weight average molecular weight of the polyethylene may be, for example, 100,000 to 12,000,000 Dalton, 100,000 to 8,000,000 Dalton, 100,000 to 5,000,000 Dalton, or 200,000 to 3,000,000 Dalton. The polypropylene may be a homopolymer, a random copolymer, or a block copolymer, and may be used alone or as a mixture of two or more thereof. In addition, the polymerization catalyst is not particularly limited, and a Ziegler-Natta catalyst, a metallocene catalyst, or the like may be used. Further, stereoregularity is also not particularly limited, and isotactic, syndiotactic, or atactic polypropylene may be used, but inexpensive isotactic polypropylene may be used. Additives such as polyolefins other than polyethylene or polypropylene and antioxidants may be added to the polyolefin.

The porous membrane may include, for example, a polyolefin such as polyethylene and polypropylene, and a multilayer membrane having two or more layers may be used. For example, the porous membrane may be a mixed multilayer membrane such as a polyethylene/polypropylene two-layer separator, a polyethylene/polypropylene/polyethylene three-layer separator, or a polypropylene/polyethylene/polypropylene three-layer separator, but is not limited thereto, and any material and configuration that may be used as a porous substrate in the art may be used.

The porous membrane may include, for example, a diene-based polymer prepared by polymerizing a monomer composition including a diene-based monomer. The diene-based monomer may be a conjugated diene-based monomer or a nonconjugated diene-based monomer. For example, the diene-based monomer includes one or more selected from the group consisting of 1,3-butadiene, isoprene, 2-chloro-1,3-butadiene, 2,3-dimethyl-1,3-butadiene, 2-ethyl-1,3-butadiene, 1,3-pentadiene, chloroprene, vinylpyridine, vinylnorbornene, dicyclopentadiene, and 1,4-hexadiene, but is not necessarily limited thereto, and any material that may be used as a diene-based monomer in the art may be used.

The porous membrane may be, for example, an insulating porous membrane. Since the porous membrane is an insulating porous membrane, pores may be sealed by melting of the porous membrane at high temperature to form an insulating layer. As a result, the all-solid secondary battery 1 may be shutdown and short circuit, thermal runaway, ignition, and the like of the all-solid secondary battery 1 may be effectively prevented.

The porous membrane may be, for example, a flame-retardant porous membrane. The porous membrane may be, for example, a flame-retardant inactive porous membrane. Since the porous membrane is a flame-retardant and/or inactive porous membrane, ignition of the all-solid secondary battery 1 at high temperature may be more effectively prevented. The porous membrane may further include a flame retardant.

The flame-retardant inactive porous membrane may further include, for example, a matrix and an additive. The matrix includes, for example, a substrate and a reinforcing material. The matrix includes, for example, a fibrous substrate and a fibrous reinforcing material. Since the matrix includes the substrate, the matrix may have elasticity. Accordingly, the matrix may effectively accommodate volume change of the all-solid secondary battery 1 during charging/discharging and may be disposed at various positions. The substrate included in the matrix includes, for example, a first fibrous material. Since the substrate includes the first fibrous material, volume change generated during the charging/discharging process of the all-solid secondary battery 1 may be effectively accommodated, and deformation of the porous membrane due to volume change of the all-solid secondary battery 1 may be effectively suppressed. The first fibrous material is, for example, a material having an aspect ratio of 5 or more, 20 or more, or 50 or more. The first fibrous material is, for example, a material having an aspect ratio of 5 to 1000, 20 to 1000, or 50 to 1000. The first fibrous material is, for example, an insulating material. Since the first fibrous material is an insulating material, short circuit between the positive electrode 30 and the negative electrode 20 due to lithium dendrites generated during the charging/discharging process of the all-solid secondary battery 1 may be effectively prevented. The first fibrous material includes, for example, one or more selected from pulp fibers, insulating polymer fibers, and ion-conductive polymer fibers. Since the matrix includes the reinforcing material, strength of the matrix is improved. Accordingly, the matrix may prevent excessive volume change of the all-solid secondary battery 1 during charging/discharging and may prevent deformation of the all-solid secondary battery 1. The reinforcing material included in the matrix includes, for example, a second fibrous material. Since the reinforcing material includes the second fibrous material, strength of the matrix may be increased more uniformly. The second fibrous material is, for example, a material having an aspect ratio of 3 or more, 5 or more, or 10 or more. The first fibrous material is, for example, a material having an aspect ratio of 3 to 100, 5 to 100, or 10 to 100. The second fibrous material is, for example, a flame-retardant material. Since the second fibrous material is a flame-retardant material, ignition due to thermal runaway generated during the charging/discharging process of the all-solid secondary battery 1 or due to external impact may be effectively suppressed. The second fibrous material is, for example, glass fibers, metal oxide fibers, ceramic fibers, and the like.

The flame-retardant inactive porous membrane may further include an additive in addition to the matrix. The filler may be disposed inside the matrix, on a surface of the matrix, or both inside and on the surface thereof. The additive is, for example, an inorganic material. The additive included in the flame-retardant inactive porous membrane is, for example, a moisture getter. The additive removes residual moisture within the all-solid-state secondary battery 1 by adsorbing moisture at a temperature of, for example, less than 100°C, thereby preventing the degradation of the all-solid-state secondary battery 1. When temperature of the all-solid secondary battery 1 increases to 150 °C or higher due to thermal runaway generated during the charging/discharging process of the all-solid secondary battery 1 or due to external impact, the additive may effectively suppress ignition of the all-solid secondary battery 1 by releasing the adsorbed moisture. The additive is, for example, a flame retardant. The additive is, for example, a metal hydroxide having moisture adsorption properties. The metal hydroxide included in the additive is, for example, Mg(OH)₂, Fe(OH)₃, Sb(OH)₃, Sn(OH)₄, Tl(OH)3, Zr(OH)₄, Al(OH)₃, or a combination thereof. A content of the additive included in the flame-retardant inactive porous membrane is, for example, 10 to 80 parts by weight, 20 to 80 parts by weight, 30 to 80 parts by weight, 40 to 80 parts by weight, 50 to 80 parts by weight, 60 to 80 parts by weight, or 65 to 80 parts by weight, based on 100 parts by weight of the flame-retardant inactive porous membrane.

A thickness of the porous membrane may be, for example, 1 to 200 µm, 1 to 100 µm, 1 to 50 µm, 1 to 30 µm, 3 to 30 µm, 5 to 30 µm, 5 to 25 µm, or 15 to 25 µm. When the thickness of the porous membrane is excessively thin, it may be difficult to maintain mechanical properties of the porous membrane, and when the thickness of the porous membrane is excessively thick, energy density of the all-solid secondary battery 1 may decrease. The thickness of the porous membrane may be measured, for example, in micrometers. The thickness of the porous membrane may be measured according to, for example, ASTM D374.

A porosity of the porous membrane may be, for example, 20 to 99 vol%, 30 to 95 vol%, 30 to 80 vol%, or 40 to 70 vol%. When the porosity is excessively low, internal resistance of the solid separator 40 may increase excessively. When the porosity of the porous membrane is excessively high, it may be difficult to maintain mechanical properties of the porous membrane. The porosity of the porous membrane may be measured by, for example, a nitrogen adsorption method. The porosity of the porous membrane may be calculated by measuring volume and weight of the porous membrane to calculate film density (d1) of the porous membrane. Using true density (d0) of the porous membrane material and the measured film density (d1) of the porous membrane, the porosity may be calculated according to the following equation. Porosity (%) = (d0-d1)/d0×100.

A pore size of the porous membrane may be, for example, 0.01 to 10 µm, 0.01 to 5 µm, 0.01 to 2 µm, 0.01 to 1 µm, 0.01 to 0.5 µm, or 0.1 to 0.5 µm. When the pore size of the porous membrane is excessively small, internal resistance of the electrolyte layer 30 may increase excessively, and when the pore size of the porous substrate is excessively large, the possibility of short circuit of the secondary battery may increase. The pore size of the porous membrane may be measured by, for example, a nitrogen adsorption method.

### [Solid Separator: Inorganic Filler]

Referring to FIG. 1 to FIG. 12, the solid separator 40 includes an inorganic filler.

The inorganic filler may be impregnated into, for example, the porous membrane. For example, the inorganic filler in a solid state may first be heated to prepare the inorganic filler in a liquid state. Subsequently, the inorganic filler in the liquid state may be applied to the porous membrane so that the inorganic filler is impregnated into the porous membrane. The porous membrane impregnated with the inorganic filler may be cooled to room temperature to prepare the solid separator. The inorganic filler may be impregnated into pores of the porous membrane.

In the solid separator, the inorganic filler may be disposed in, for example, pores of the porous membrane. A shape of the inorganic filler disposed in the pores of the porous membrane may substantially conform to a shape of the pores. A surface of the pores of the porous membrane may act as a kind of mold. Accordingly, the shape of the inorganic filler disposed in the pores of the porous membrane may substantially match, for example, the shape of the pores. In addition, a surface profile of the inorganic filler disposed in the pores of the porous membrane may substantially conform to a surface profile of the pores. The surface profile of the inorganic filler disposed in the pores of the porous membrane may substantially match, for example, the surface profile of the pores.

The inorganic filler may be, for example, amorphous. The inorganic filler may be, for example, an amorphous lithium metal oxyhalide. After preparing a crystalline inorganic filler, the crystalline inorganic filler may be melted to prepare a molten salt and then cooled to prepare an amorphous inorganic filler. Alternatively, the amorphous inorganic filler may be directly prepared by adjusting a composition during preparation of the inorganic filler. After preparing a crystalline lithium metal oxyhalide, the crystalline lithium metal oxyhalide may be melted to prepare a molten salt and then cooled to prepare an amorphous lithium metal oxyhalide. Alternatively, the amorphous lithium metal oxyhalide may be directly prepared by adjusting a composition during preparation of the lithium metal oxyhalide. The amorphous inorganic filler may have, for example, ductility. Since the amorphous inorganic filler has ductility, volume change during charging/discharging of the all-solid secondary battery 1 may be more effectively accommodated. In contrast, the crystalline lithium metal oxyhalide may have relatively high brittleness compared with the amorphous lithium metal oxyhalide. Whether the inorganic filler is amorphous may be confirmed using an XRD spectrum.

The inorganic filler may be, for example, glassy. The inorganic filler may be, for example, a glassy lithium metal oxyhalide having a glass transition temperature (Tg). The glassy lithium metal oxyhalide may have ductility. Since the inorganic filler has ductility, volume change of the all-solid secondary battery 1 during charging/discharging may be effectively accommodated or the inorganic filler may be easily deformed according to volume change of the all-solid secondary battery 1.

The glass transition temperature of the inorganic filler may be, for example, 20 °C or lower, 10 °C or lower, 0 °C or lower, or -10 °C or lower. Since the inorganic filler has such a low glass transition temperature, the inorganic filler may be easily transitioned from a brittle crystalline metal salt state to a ductile glassy state. For example, the inorganic filler may be melted and then cooled so as to be easily transitioned from a crystalline molten salt state to a glassy state. Alternatively, a glassy state may be obtained during preparation of the inorganic filler. The glass transition temperature may be measured using, for example, a Differential Scanning Calorimeter (DSC). The glass transition temperature may be measured using, for example, a Dynamic Mechanical Analyzer (DMA).

A melting point of the inorganic filler may be, for example, 100 °C or higher, 105 °C or higher, 110 °C or higher, 115 °C or higher, 120 °C or higher, 125 °C or higher, 130 °C or higher, 135 °C or higher, 140 °C or higher, or 145 °C or higher. The melting point of the inorganic filler may be, for example, 200 °C or lower, 190 °C or lower, 180 °C or lower, 170 °C or lower, 160 °C or lower, or 150 °C or lower. Since the inorganic filler has a melting point within these ranges, the inorganic filler may be melted into a molten salt state and then cooled to easily prepare an amorphous inorganic filler. The melting point of the inorganic filler may be measured using, for example, a Differential Scanning Calorimeter (DSC).

The inorganic filler may be an ion-conductive inorganic filler. The inorganic filler may have, for example, ionic conductivity of 0.01 mS/cm or more, 0.05 mS/cm or more, 0.1 mS/cm or more, 0.3 mS/cm or more, 0.5 mS/cm or more, 0.7 mS/cm or more, or 1.0 mS/cm or more at 25 °C and 1 atm. The ionic conductivity may be measured by AC impedance analysis. A voltage amplitude used in the AC impedance analysis may be 5 to 10 mV, and a frequency may be 1 MHz to 1 Hz. Since the inorganic filler has ionic conductivity, increase in interfacial resistance between positive electrode active material particles, between first solid electrolyte particles, and/or between the positive electrode active material and the first solid electrolyte in the positive electrode active material layer may be effectively suppressed.

An elastic modulus (or Young's modulus) of the inorganic filler at 30 °C may be 10 GPa or less, 5 GPa or less, 3 GPa or less, or 2 GPa or less. Since the inorganic filler has such a low elastic modulus within these ranges, the solid separator including the inorganic filler may effectively accommodate volume change of the all-solid secondary battery 1. Accordingly, cycle characteristics of the all-solid secondary battery 1 may be improved. The elastic modulus of the inorganic filler may be measured using, for example, a Dynamic Mechanical Analyzer (DMA).

The elastic modulus of the inorganic filler may be smaller than, for example, an elastic modulus (or Young's modulus) of the first solid electrolyte. The elastic modulus of the first solid electrolyte at 30 °C may be, for example, 22 to 30 GPa. The elastic modulus of the inorganic filler may be, for example, 90 % or less, 50 % or less, 40 % or less, 30 % or less, 20 % or less, or 10 % or less of the elastic modulus of the first solid electrolyte. The inorganic filler may be additionally disposed in the positive electrode active material layer 20. In such an all-solid secondary battery 1, since the inorganic filler has a lower elastic modulus than the first solid electrolyte, the inorganic filler may easily fill pores between the first solid electrolytes and/or pores between the first solid electrolyte and the positive electrode active material to reduce internal resistance of the positive electrode active material layer 12 and easily accommodate volume change of the positive electrode active material layer 12 during charging/discharging. As a result, cycle characteristics of the all-solid secondary battery 1 may be further improved. The elastic modulus of the first solid electrolyte may be measured using, for example, a Dynamic Mechanical Analyzer (DMA).

The inorganic filler may have, for example, viscoelasticity. The inorganic filler may have, for example, viscoelastic creep. A viscoelastic creep rate of the inorganic filler may be, for example, 1×10-4 %/s or more, 2×10-4 %/s or more, or 4×10-4 %/s or more. %/s is a ratio of a deformed size relative to an initial size per unit time (second). Since the inorganic filler has viscoelasticity, volume change during charging/discharging of the all-solid secondary battery 1 may be easily accommodated and the shape thereof may be continuously deformed without defects. A creep rate is a rate of change over time, that is, a deformation rate, of the inorganic filler subjected to stress at a constant temperature. The creep rate may be measured using, for example, a Universal Test Machine.

The inorganic filler includes a lithium metal oxyhalide represented by LiₐM_{b}O_{c}Cl_{d} (0<a≤3; 0<b≤3; 0<c≤3; 0<d≤8; c<d; a/(a+b+c+d)<0.5, and M is a metal selected from Group 3 to Group 15 of the periodic table of elements). For example, in LiₐM_{b}O_{c}Cl_{d}, 0<a≤2; 0<b≤2.5; 0<c≤2.5; 0<d≤7; c<d; a/(a+b+c+d)<0.5. For example, in LiₐM_{b}O_{c}Cl_{d}, 0<a≤1.5; 0<b≤3; 0<c≤2; 0<d≤6; c<d; a/(a+b+c+d)<0.5. For example, in LiₐM_{b}O_{c}Cl_{d}, 0<a≤1; 0<b≤2.5; 0<c≤1.5; 0<d≤5; c<d; a/(a+b+c+d)<0.5. For example, in LiₐM_{b}O_{c}Cl_{d}, 0<a≤1; 0<b≤2; 0<c≤1; 0<d≤4; c<d; a/(a+b+c+d)<0.5.

The metal M of the lithium metal oxyhalide may include, for example, Fe, Ga, In, As, Sb, Mo, Bi, B, or a combination of two or more thereof.

The lithium metal oxyhalide may include, for example, LiAl_{b}O_{c}Cl_{d} (0<b≤3; 0<c≤2; 0<d≤4; c<d; 1/(1+b+c+d)<0.5); LiFe_{b}O_{c}Cl_{d} (0<b≤3; 0<c≤2; 0<d≤4; c<d; 1/(1+b+c+d)<0.5); LiGa_{b}O_{c}Cl_{d} (0<b≤3; 0<c≤2; 0<d≤4; c<d; 1/(1+b+c+d)<0.5); LiIn_{b}O_{c}Cl_{d} (0<b≤3; 0<c≤2; 0<d≤4; c<d; 1/(1+b+c+d)<0.5); LiAs_{b}O_{c}Cl_{d} (0<b≤3; 0<c≤2; 0<d≤4; c<d; 1/(1+b+c+d)<0.5); LiSb_{b}O_{c}Cl_{d} (0<b≤3; 0<c≤2; 0<d≤4; c<d; 1/(1+b+c+d)<0.5); LiMo_{b}O_{c}Cl_{d} (0<b≤3; 0<c≤2; 0<d≤4; c<d; 1/(1+b+c+d)<0.5); LiBi_{b}O_{c}Cl_{d} (0<b≤3; 0<c≤2; 0<d≤4; c<d; 1/(1+b+c+d)<0.5); LiB_{b}O_{c}Cl_{d} (0<b≤3; 0<c≤2; 0<d≤4; c<d; 1/(1+b+c+d)<0.5); LiAl_{b-e}FeₑO_{c}Cl_{d} (0<b≤3; 0<c≤2; 0<d≤4; 0<e<b; c<d; 1/(1+b+c+d+e)<0.5); LiAl_{b-e}GaₑO_{c}Cl_{d} (0<b≤3; 0<c≤2; 0<d≤4; 0<e<b; c<d; 1/(1+b+c+d+e)<0.5); LiAl_{b-e}InₑO_{c}Cl_{d} (0<b≤3; 0<c≤2; 0<d≤4; 0<e<b; c<d; 1/(1+b+c+d+e)<0.5); LiAl_{b-e}AsₑO_{c}Cl_{d} (0<b≤3; 0<c≤2; 0<d≤4; 0<e<b; c<d; 1/(1+b+c+d+e)<0.5); LiAl_{b-e}SbₑO_{c}Cl_{d} (0<b≤3; 0<c≤2; 0<d≤4; 0<e<b; c<d; 1/(1+b+c+d+e)<0.5); LiAl_{b-e}MoₑO_{c}Cl_{d} (0<b≤3; 0<c≤2; 0<d≤4; 0<e<b; c<d; 1/(1+b+c+d+e)<0.5); LiAl_{b-e}BiₑO_{c}Cl_{d} (0<b≤3; 0<c≤2; 0<d≤4; 0<e<b; c<d; 1/(1+b+c+d+e)<0.5); LiAl_{b-e}BₑO_{c}Cl_{d} (0<b≤3; 0<c≤2; 0<d≤4; 0<e<b; c<d; 1/(1+b+c+d+e)<0.5); or a combination thereof.

The lithium metal oxyhalide may include, for example, LiAlₓO_{z}Cl_{w} (0<x≤2; 0<z≤1; 2<w<4; z<w; 1/(1+x+z+w)<0.5), LiFeₓO_{z}Cl_{w} (0<x≤2; 0<z≤1; 2<w<4; z<w; 1/(1+x+z+w)<0.5), LiGaₓO_{z}Cl_{w} (0<x≤2; 0<z≤1; 2<w<4; z<w; 1/(1+x+z+w)<0.5), LiInₓO_{z}Cl_{w} (0<x≤2; 0<z≤1; 2<w<4; z<w; 1/(1+x+z+w)<0.5), LiAsₓO_{z}Cl_{w} (0<x≤2; 0<z≤1; 2<w<4; z<w; 1/(1+x+z+w)<0.5), LiSbₓO_{z}Cl_{w} (0<x≤2; 0<z≤1; 2<w<4; z<w; 1/(1+x+z+w)<0.5), LiMoₓO_{z}Cl_{w} (0<x≤2; 0<z≤1; 2<w<4; z<w; 1/(1+x+z+w)<0.5), LiBiₓO_{z}Cl_{w} (0<x≤2; 0<z≤1; 2<w<4; z<w; 1/(1+x+z+w)<0.5), LiBₓO_{z}Cl_{w} (0<x≤2; 0<z≤1; 2<w<4; z<w; 1/(1+x+z+w)<0.5), or a combination thereof.

The lithium oxyhalide may include, for example, LiAlₓFe_{y}O_{z}Cl_{w} (0<x≤2; 0≤y<1; 0<z≤1; 2<w<4; z<w; 1/(1+x+y+z+w)<0.5), LiAlₓGa_{y}O_{z}Cl_{w} (0<x≤2; 0≤y<1; 0<z≤1; 2<w<4; z<w; 1/(1+x+y+z+w)<0.5), LiAlₓIn_{y}O_{z}Cl_{w} (0<x≤2; 0≤y<1; 0<z≤1; 2<w<4; z<w; 1/(1+x+y+z+w)<0.5), LiAlₓAs_{y}O_{z}Cl_{w} (0<x≤2; 0≤y<1; 0<z≤1; 2<w<4; z<w; 1/(1+x+y+z+w)<0.5), LiAlₓSb_{y}O_{z}Cl_{w} (0<x≤2; 0≤y<1; 0<z≤1; 2<w<4; z<w; 1/(1+x+y+z+w)<0.5), LiAlₓMo_{y}O_{z}Cl_{w} (0<x≤2; 0≤y<1; 0<z≤1; 2<w<4; z<w; 1/(1+x+y+z+w)<0.5), LiAlₓBi_{y}O_{z}Cl_{w} (0<x≤2; 0≤y<1; 0<z≤1; 2<w<4; z<w; 1/(1+x+y+z+w)<0.5), LiAlₓB_{y}O_{z}Cl_{w} (0<x≤2; 0≤y<1; 0<z≤1; 2<w<4; z<w; 1/(1+x+y+z+w)<0.5), or a combination thereof.

A volume ratio of the porous membrane to the inorganic filler may be, for example, 80:20 to 1:99, 70:30 to 5:95, 70:30 to 20:80 vol%, or 60:40 to 30:70. When a content of the inorganic filler is excessively low, internal resistance of the solid separator 40 may increase excessively. When a content of the inorganic filler is excessively high, a shutdown effect of the solid separator 40 may decrease.

### [Positive Electrode Layer]

Referring to FIG. 1 to FIG. 12, the positive electrode 10 includes a positive electrode current collector 11; and a positive electrode active material layer 12 disposed on one surface or both surfaces of the positive electrode current collector 11. The positive electrode active material layer 12 includes a positive electrode active material and a first solid electrolyte.

### [Positive Electrode Active Material Layer: Positive electrode Active Material]

The content of the positive electrode active material included in the positive electrode active material layer 12 may be, for example, 10 wt% to 99 wt%, 50 wt% to 99 wt%, 70 wt% to 95 wt%, or 80 wt% to 95 wt% based on the total weight of the positive electrode active material layer 12. When the content of the positive electrode active material is excessively reduced, the energy density of the all-solid-state secondary battery 1 is reduced. When the content of the positive electrode active material is excessively increased, degradation of the all-solid-state secondary battery 1 may be accelerated due to a volume change of the positive electrode during charging/discharging.

The positive electrode active material included in the positive electrode active material layer 12 is a positive electrode active material capable of reversibly absorbing and desorbing lithium ions.

The positive electrode active material includes, for example, an oxide-based positive electrode active material, a sulfide-based positive electrode active material, or a combination thereof.

The oxide-based positive electrode active material includes, for example, a lithium transition metal oxide, a metal oxide, or a combination thereof. The lithium transition metal oxide includes, for example, lithium cobalt oxide, lithium nickel oxide, lithium nickel cobalt oxide, lithium nickel cobalt aluminium oxide, lithium nickel cobalt manganese oxide, lithium manganate, lithium iron phosphate, or a combination thereof. The lithium oxide includes, for example, iron oxide, vanadium oxide, or a combination thereof.

The sulfide-based positive electrode active material includes, for example, nickel sulfide, copper sulfide, Li₂S, an Li₂S-containing composite, or a combination thereof.

The oxide-based positive electrode active material may include, for example, one or more selected from composite oxides of lithium and a metal selected from cobalt, manganese, nickel, and combinations thereof. The lithium-containing oxide-based positive electrode active material may include, for example, a compound represented by any one of the following Formulae: LiₐA_{1-b}B'_{b}D₂ (wherein, 0.90 ≤ a ≤ 1, and 0 ≤ b ≤ 0.5); LiₐE_{1-b}B'_{b}O_{2-c}D_{c} (wherein, 0.90 ≤ a ≤ 1, 0 ≤ b ≤ 0.5, and 0 ≤ c ≤ 0.05); LiE_{2-b}B'_{b}O_{4-c}D_{c} (wherein, 0 ≤ b ≤ 0.5, and 0 ≤ c ≤ 0.05); LiₐNi_{1-b-c}Co_{b}B'_{c}D_{α} (wherein, 0.90 ≤ a ≤ 1, 0 ≤ b ≤ 0.5, 0 ≤ c ≤ 0.05, and 0 < α ≤ 2); LiₐNi_{1-b-c}Co_{b}B'_{c}O_{2-α}F'_{α} (wherein, 0.90 ≤ a ≤ 1, 0 ≤ b ≤ 0.5, 0 ≤ c ≤ 0.05, and 0 < α < 2); LiₐNi_{1-b-c}Mn_{b}B'_{c}D_{α} (wherein, 0.90 ≤ a ≤ 1, 0 ≤ b ≤ 0.5, 0 ≤ c ≤ 0.05, and 0 < α ≤ 2); LiₐNi_{1-b-c}Mn_{b}B'_{c}O_{2-α}F'_{α} (wherein, 0.90 ≤ a ≤ 1, 0 ≤ b ≤ 0.5, 0 ≤ c ≤ 0.05, and 0 < α < 2); LiₐNi_{b}E_{c}G_{d}O₂ (wherein, 0.90 ≤ a ≤ 1, 0 ≤ b ≤ 0.9, 0 ≤ c ≤ 0.5, and 0.001 ≤ d ≤ 0.1); LiₐNi_{b}Co_{c}Mn_{d}GₑO₂ (wherein, 0.90 ≤ a ≤ 1, 0 ≤ b ≤ 0.9, 0 ≤ c ≤ 0.5, 0 ≤ d ≤ 0.5, and 0.001 ≤ e ≤ 0.1); LiₐNiG_{b}O₂ (wherein, 0.90 ≤ a ≤ 1, and 0.001 ≤ b ≤ 0.1); LiₐCoG_{b}O₂ (wherein, 0.90 ≤ a ≤ 1, and 0.001 ≤ b ≤ 0.1); LiₐMnG_{b}O₂ (wherein, 0.90 ≤ a ≤ 1, and 0.001 ≤ b ≤ 0.1); LiₐMn₂G_{b}O₄ (wherein, 0.90 ≤ a ≤ 1, and 0.001 ≤ b ≤ 0.1); LiV₂O₅; LiI'O₂; LiNiVO₄; Li_{(3-f)}J₂(PO₄)₃ (0 ≤ f ≤ 2); Li_{(3-f)}Fe₂(PO₄)₃ (0 ≤ f ≤ 2); or LiFePO4.

In the Formulae representing the aforementioned compounds, A is Ni, Co, Mn, or a combination thereof; B' is Al, Ni, Co, Mn, Cr, Fe, Mg, Sr, V, a rare earth element, or a combination thereof; D is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; and J is V, Cr, Mn, Co, Ni, Cu, or a combination thereof. A compound having a coating layer added to a surface of the aforementioned compound may also be used, and a mixture of the aforementioned compound and the compound having the coating layer added thereto may also be used. The coating layer added to the surface of the aforementioned compound includes, for example, a coating element compound including an oxide of a coating element, a hydroxide of a coating element, an oxyhydroxide of a coating element, an oxycarbonate of a coating element, or a hydroxycarbonate of a coating element. The compound constituting the coating layer is amorphous or crystalline. The coating element included in the coating layer is Mg, Al, Co, K, Na, Ca, Si, Ti, V, Sn, Ge, Ga, B, As, Zr, or a mixture thereof. The method of forming the coating layer is selected within a range that does not adversely affect physical properties of the positive electrode active material. The coating method includes, for example, spray coating, immersion methods, and the like. Since specific coating methods are well understood by those skilled in the art, a detailed description thereof will be omitted.

The oxide-based positive electrode active material may include, for example, a lithium transition metal oxide represented by the following Formulae 1 to 8:

<Formula 1> LiₐNiₓCo_{y}M_{z}O_{2-b}A_{b}

wherein, in Formula 1,
1.0 ≤ a ≤ 1.2, 0 ≤ b ≤ 0.2, 0.8 ≤ x < 1, 0 ≤ y ≤ 0.3, 0 < z ≤ 0.3, and x+y+z=1,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof,
A is F, S, Cl, Br, or a combination thereof,

   <Formula 2> LiNiₓCo_{y}Mn_{z}O₂

   <Formula 3> LiNiₓCo_{y}Al_{z}O₂
wherein, in Formulae 2 and 3, 0.8 ≤ x ≤ 0.95, 0 ≤ y ≤ 0.2, 0 < z ≤ 0.2, and x+y+z=1,

   <Formula 4> LiNiₓCo_{y}Mn_{z}Al_{w}O₂
wherein, in Formula 4, 0.8 ≤ x ≤ 0.95, 0 ≤ y ≤ 0.2, 0 < z ≤ 0.2, 0 < w ≤ 0.2, and x+y+z+w=1,

   <Formula 5> LiₐCoₓM_{y}O_{2-b}A_{b}

   wherein, in Formula 5,
   1.0 ≤ a ≤ 1.2, 0 ≤ b ≤ 0.2, 0.9 ≤ x ≤ 1, 0 ≤ y ≤ 0.1, and x+y=1,
   M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof,
   A is F, S, Cl, Br, or a combination thereof,

      <Formula 6> LiₐNiₓMn_{y}M'_{z}O_{2-b}A_{b}

      wherein, in Formula 6,
      1.0 ≤ a ≤ 1.2, 0 ≤ b ≤ 0.2, 0 < x ≤ 0.3, 0.5 ≤ y < 1, 0 < z ≤ 0.3, and x+y+z=1,
      M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof,
      A is F, S, Cl, Br, or a combination thereof,

         <Formula 7> LiₐM1ₓM2_{y}PO_{4-b}X_{b}
      wherein, in Formula 7, 0.90 ≤ a ≤ 1.1, 0 ≤ x ≤ 0.9, 0 ≤ y ≤ 0.5, 0.9 < x+y < 1.1, and 0 ≤ b ≤ 2,
      M1 is chromium (Cr), manganese (Mn), iron (Fe), cobalt (Co), nickel (Ni), copper (Cu), zirconium (Zr), or a combination thereof,
      M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or a combination thereof, and X is O, F, S, P, or a combination thereof.

         <Formula 8> LiₐM3_{z}PO₄
      wherein, in Formula 8, 0.90 ≤ a ≤ 1.1, and 0.9 ≤ z ≤ 1.1,
      M3 is chromium (Cr), manganese (Mn), iron (Fe), cobalt (Co), nickel (Ni), copper (Cu), zirconium (Zr), or a combination thereof.

Oxide-based positive electrode active material may be covered by a covering layer. The covering layer may be any covering layer known as a covering layer of a positive electrode active material of an all-solid-state secondary battery. The covering layer may be, for example, Li₂O-ZrO₂ (LZO) or the like.

The size of the oxide-based positive electrode active material may be, for example, 0.1 to 30 µm, 0.5 to 20 µm, or 1 to 15 µm. The oxide-based positive electrode active material may be, for example, single-crystal particles or polycrystalline particles.

The sulfide-based positive electrode active material may include, for example, a Li₂S-containing composite. The Li₂S-containing composite may include, for example, a composite of Li₂S and carbon, a composite of Li₂S and carbon and a solid electrolyte, a composite of Li₂S and a solid electrolyte, a composite of Li₂S and a lithium salt, a composite of Li₂S and a lithium salt and carbon, a composite of Li₂S and a metal carbide, a composite of Li₂S and carbon and a metal carbide, a composite of Li₂S and a metal nitride, a composite of Li₂S and carbon and a metal nitride, or a combination thereof.

The composite of Li₂S and carbon includes carbon. Carbon may be, for example, any material including carbon atoms that is used as a conductive material in the art. The carbon may be, for example, crystalline carbon, amorphous carbon, or a combination thereof. The carbon may be, for example, a calcined product of a carbon precursor. The carbon may be, for example, a carbon nanostructure. The carbon nanostructure may be, for example, a one-dimensional carbon nanostructure, a two-dimensional carbon nanostructure, a three-dimensional carbon nanostructure, or a combination thereof. The carbon nanostructure may be, for example, carbon nanotubes, carbon nanofibers, carbon nanobelts, carbon nanorods, graphene, graphene oxide (GO), reduced graphene oxide (rGO), graphene balls (GB), or a combination thereof. The carbon may be, for example, porous carbon or non-porous carbon. The porous carbon may include, for example, periodic and regular two-dimensional or three-dimensional pores. The porous carbon may be, for example, carbon black such as ketjen black, acetylene black, denka black, thermal black, and channel black; graphite, activated carbon, or a combination thereof. The form of the carbon may be, for example, a particle form, a sheet form, a fibrous form, etc., but is not limited thereto, and any form used as carbon in the art may be used. The method of preparing the composite of Li₂S and carbon may be a dry method, a wet method, or a combination thereof, but is not limited thereto, and the method of preparing the composite of Li₂S and carbon in the art may be, for example, milling, heat treatment, deposition, etc., but is not necessarily limited thereto, and any method used in the art may be used.

The composite of Li₂S and carbon and a solid electrolyte includes carbon and a solid electrolyte. The carbon refers to the aforementioned composite of Li₂S and carbon. The solid electrolyte may be, for example, an amorphous solid electrolyte, and may be any material used as an ion-conductive material in the art. The solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte includes, for example, Li, S, and P, and may optionally further include a halogen element. The sulfide-based solid electrolyte may be selected from among the sulfide-based solid electrolytes used in the solid electrolyte layer. The sulfide-based solid electrolyte may have, for example, an ionic conductivity of 1×10-5 S/cm or more at room temperature. The sulfide-based solid electrolyte may include, for example, one or more selected from Li₃PO₄-Li₂SO₄, Li₂S-P₂S₅, Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n are positive numbers, and Z is one of Ge, Zn, and Ga, Li₂S-GeS₂, Li₂S-SiS₂-Li₃PO₄, Li₂S-SiS₂-LiₚMO_{q}, wherein p and q are positive numbers, and M is one of P, Si, Ge, B, Al, Ga, and In, Li₇₋ₓPS₆₋ₓClₓ, 0≤x≤2, Li₇₋ₓPS₆₋ₓBrₓ, 0≤x≤2, and Li₇₋ₓPS₆₋ₓIₓ, 0≤x≤2. The oxide-based solid electrolyte includes, for example, Li, O, and a transition metal element, and may optionally further include another element. The oxide-based solid electrolyte may be, for example, a solid electrolyte having an ionic conductivity of 1×10-5 S/cm or more at room temperature. The oxide-based solid electrolyte may be selected from among the oxide-based solid electrolytes used in the solid electrolyte layer. The solid electrolyte may be, for example, a mixture of a sulfide-based solid electrolyte and a lithium salt. For example, the solid electrolyte may be a mixture of Li₃PO₄-Li₂SO₄ and a binary lithium salt, or a mixture of Li₃PO₄-Li₂SO₄ and a ternary lithium salt.

The composite of Li₂S and a solid electrolyte includes a solid electrolyte. The solid electrolyte refers to the complex of Li₂S, carbon, and solid electrolyte described above.

The composite of Li₂S and a lithium salt includes a lithium salt compound. The lithium salt compound does not include, for example, a sulfur (S) atom. The lithium salt compound may be, for example, a binary compound including lithium and one element selected from Group 13 to Group 17 of the periodic table of elements. The binary compound may include, for example, one or more selected from LiF, LiCl, LiBr, LiI, LiH, Li₂S, Li₂O, Li₂Se, Li₂Te, Li₃N, Li₃P, Li₃As, Li₃Sb, LiI₃, and LiB₃. The lithium salt compound may be, for example, a ternary compound including lithium and two elements selected from Group 13 to Group 17 of the periodic table of elements. The ternary compound may include, for example, one or more selected from Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, and Li₃BN₂. The lithium salt compound is particularly one or more lithium halide compound selected from LiF, LiCl, LiBr, and LiI. The composite of Li₂S and a solid electrolyte includes a solid electrolyte. The solid electrolyte refers to the solid electrolyte used in the aforementioned composite of Li2S and carbon and a solid electrolyte. The composite of Li₂S and a solid electrolyte may include, for example, a composite of Li₂S and one or more lithium salt selected from LiF, LiCl, LiBr, LiI, LiH, Li₂S, Li₂O, Li₂Se, Li₂Te, Li₃N, Li₃P, Li₃As, Li₃Sb, LiI₃, and LiB₃.

The composite of Li₂S and a lithium salt and carbon includes a lithium salt compound and carbon. The carbon refers to the aforementioned composite of Li₂S and carbon.

The composite of Li₂S and a metal carbide includes a metal carbide. The metal carbide may be, for example, a two-dimensional metal carbide. The two-dimensional metal carbide may be, for example, MXene. The two-dimensional metal carbide is represented by, for example, Mₙ₊₁CₙTₓ (wherein M is a transition metal, T is a terminal group, T is O, OH, and/or F, n=1, 2, or 3, and x is the number of terminal groups). The two-dimensional metal carbide may be, for example, Ti₂CTₓ, (Ti₀.5, Nb₀.₅)₂CTₓ, Nb₂CTₓ, V₂CTₓ, Ti₃C₂Tₓ, (V₀.5, Cr₀.₅)₃C₂Tₓ, Ti₃CNTₓ, Ta₄C₃Tₓ, Nb₄C₃Tₓ, or a combination thereof. The surface of the two-dimensional metal carbide is terminated with O, OH, and/or F.

The composite of Li₂S and carbon and a metal carbide includes carbon and a metal carbide. The carbon refers to the aforementioned composite of Li₂S and carbon. The metal carbide refers to the aforementioned composite of Li₂S and a metal carbide.

The composite of Li₂S and a metal nitride includes a metal nitride. The metal nitride may be, for example, a two-dimensional metal nitride. The two-dimensional metal nitride is represented by, for example, Mₙ₊₁NₙTₓ (wherein M is a transition metal, T is a terminal group, T is O, OH, and/or F, n=1, 2, or 3, and x is the number of terminal groups). The surface of the two-dimensional metal nitride is terminated with O, OH, and/or F.

The composite of Li₂S and carbon and a metal nitride includes carbon and a metal nitride. The carbon refers to the aforementioned composite of Li₂S and carbon. The metal carbide refers to the aforementioned composite of Li₂S and a metal nitride.

The Li₂S-containing composite may further include, for example, a second fibrous sulfide-based solid electrolyte (not illustrated). The Li₂S-containing composite may be a composite of Li₂S and the second fibrous sulfide-based solid electrolyte, or a composite of Li₂S and the second fibrous sulfide-based solid electrolyte and the aforementioned carbon, solid electrolyte, lithium salt, metal carbide, or metal nitride. In addition, the positive electrode active material layer may further include a first fibrous sulfide-based solid electrolyte (not illustrated).

As the Li₂S-containing composite further includes the second fibrous sulfide-based solid electrolyte, degradation of the lithium battery may be further suppressed and cycle characteristics of the lithium battery may be further improved. The size of the second fibrous sulfide-based solid electrolyte may be smaller than the size of the first fibrous sulfide-based solid electrolyte. The length and/or thickness of the second fibrous sulfide-based solid electrolyte may each be 50 % or less, 40 % or less, 30 % or less, 20 % or less, or 10 % or less of the length and/or thickness of the first fibrous sulfide-based solid electrolyte. The length and/or thickness of the second fibrous sulfide-based solid electrolyte may each be 0.1 to 50 %, 0.5 to 40 %, 1 to 30 %, 1 to 20 %, or 1 to 10 % of the length and/or thickness of the first fibrous sulfide-based solid electrolyte. The second fibrous sulfide-based solid electrolyte may have, for example, the same shape as the first fibrous sulfide-based solid electrolyte and may have a smaller size. As the second fibrous sulfide-based solid electrolyte has such reduced length and/or thickness, the second fibrous sulfide-based solid electrolyte may be easily distributed in the Li₂S-containing composite. As the second fibrous sulfide-based solid electrolyte has such reduced length and/or thickness, degradation of the lithium battery may be further suppressed and cycle characteristics of the lithium battery may be further improved.

The size of the sulfide-based positive electrode active material may be, for example, 0.1 to 50 µm, 0.5 to 30 µm, 0.5 to 20 µm, or 1 to 10 µm. The size of Li2S may be, for example, 1 nm to 10 µm, 10 nm to 5 µm, 10 nm to 3 µm, or 10 nm to 1 µm. The size of the Li2S-containing composite may be, for example, 0.1 to 50 µm, 0.5 to 30 µm, 0.5 to 20 µm, or 1 to 10 µm.

The shape of the positive electrode active material is, for example, a particle shape such as a true spherical shape or an elliptical spherical shape. The particle diameter of the positive electrode active material is not particularly limited, and is within a range applicable to a positive electrode active material of a conventional all-solid-state secondary battery.

The positive electrode active material may include, for example, a composite positive electrode active material. The composite positive electrode active material may include, for example, a core including a lithium transition metal oxide; and a shell disposed along a surface of the core. The shell may include an inorganic filler. The inorganic filler includes a lithium metal oxyhalide represented by LiₐAl_{b}M_{c}O_{d}Clₑ (0<a≤3; 0<b≤3; 0≤c<2; 0<d≤4; 0<e≤2; d<e, wherein M is a metal selected from Group 3 to Group 15 of the periodic table of elements).

In the composite positive electrode active material, a shell including the inorganic filler may be coated on a portion or all of the core. In the composite positive electrode active material, as the inorganic filler is disposed on a portion or all of the lithium transition metal oxide core, an increase in interfacial resistance between the composite positive electrode active material and the first solid electrolyte may be suppressed. As a result, internal resistance of the all-solid-state secondary battery 1 may be reduced, and cycle characteristics of the all-solid-state secondary battery 1 may be improved.

In the composite positive electrode active material, the content of the inorganic filler may be 0.1 to 20 parts by weight, 0.1 to 10 parts by weight, or 0.1 to 5 parts by weight based on 100 parts by weight of the core. As the composite positive electrode active material has the inorganic filler content within this range, a portion or all of the surface of the core may be coated with the inorganic filler. If the content of the inorganic filler coated on the core is excessively low, the coating effect may be insignificant. If the content of the inorganic filler coated on the core is excessively high, the energy density of the positive electrode active material layer 12 may decrease.

### [Positive Electrode Active Material Layer: First Solid Electrolyte]

Referring to FIG. 1 to FIG. 12, the positive electrode active material layer 12 includes a first solid electrolyte. The first solid electrolyte included in the positive electrode active material layer 12 may be the same as or different from the solid electrolyte included in the solid electrolyte layer 30.

The first solid electrolyte included in the positive electrode active material layer 12 may have a smaller D50 average particle diameter than the solid electrolyte included in the solid electrolyte layer 30. For example, the D50 average particle diameter of the first solid electrolyte included in the positive electrode active material layer 12 may be 90 % or less, 80 % or less, 70 % or less, 60 % or less, 50 % or less, 40 % or less, 30 % or less, or 20 % or less of the D50 average particle diameter of the solid electrolyte included in the solid electrolyte layer 30. The D50 average particle diameter is, for example, a median particle diameter (D50). The median particle diameter (D50) is, for example, a particle size corresponding to a cumulative volume of 50 % calculated from the particle side having a smaller particle size in a particle size distribution measured by laser diffraction.

The content of the first solid electrolyte included in the positive electrode active material layer 12 may be, for example, 1 wt% to 40 wt%, 1 wt% to 30 wt%, 1 wt% to 20 wt%, or 1 wt% to 10 wt% based on the total weight of the positive electrode active material layer 12.

The first solid electrolyte may be, for example, a sulfide-based solid electrolyte. The sulfide-based solid electrolyte may be, for example, one or more selected from Li₂S-P₂S₅, Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n are positive numbers, and Z is one of Ge, Zn, and Ga, Li₂S-GeS₂, Li₂S-SiS₂-Li₃PO₄, Li₂S-SiS₂-LiₚMO_{q}, wherein p and q are positive numbers, and M is one of P, Si, Ge, B, Al, Ga, and In, Li₇₋ₓPS₆₋ₓClₓ, 0≤x≤2, Li₇₋ₓPS₆₋ₓBrₓ, 0≤x≤2, and Li₇₋ₓPS₆₋ₓIₓ, 0≤x≤2. The sulfide-based solid electrolyte is prepared, for example, by processing starting materials such as Li₂S and P₂S₅ by a melt quenching method or a mechanical milling method. In addition, heat treatment may be performed after such processing. The solid electrolyte may be amorphous, crystalline, or a mixed state thereof. In addition, the solid electrolyte may be, for example, one including sulfur (S), phosphorus (P), and lithium (Li) as at least constituent elements among the aforementioned sulfide-based solid electrolyte materials. For example, the solid electrolyte may be a material including Li₂S-P₂S₅. When Li₂S-P₂S₅ is used as the sulfide-based solid electrolyte material forming the solid electrolyte, the mixed molar ratio of Li₂S and P₂S₅ is, for example, within a range of Li₂S : P₂S₅ = 20 : 80 to 90 : 10, 25 : 75 to 90 : 10, 30 : 70 to 70 : 30, or 40 : 60 to 60 : 40.

The sulfide-based solid electrolyte may include, for example, an argyrodite-type solid electrolyte represented by Formula A below:

<Formula A> Li⁺₁₂₋ₙ₋ₓAⁿ⁺X²⁻₆₋ₓY⁻ₓ

In the above formula, A is P, As, Ge, Ga, Sb, Si, Sn, Al, In, Ti, V, Nb, or Ta, X is S, Se, or Te, Y is Cl, Br, I, F, CN, OCN, SCN, or N₃, and 1≤n≤5, 0≤x≤2. The sulfide-based solid electrolyte may be, for example, an argyrodite-type compound including one or more selected from Li₇₋ₓPS₆₋ₓClₓ, 0≤x≤2, Li₇₋ₓPS₆₋ₓBrₓ, 0≤x≤2, and Li₇₋ₓPS₆₋ₓIₓ, 0≤x≤2. The sulfide-based solid electrolyte may be, for example, an argyrodite-type compound including one or more selected from Li₆PS₅Cl, Li₆PS₅Br, and Li₆PS₅I.

The density of the argyrodite-type solid electrolyte may be 1.5 to 2.0 g/cc. As the argyrodite-type solid electrolyte has a density of 1.5 g/cc or more, internal resistance of the all-solid-state secondary battery may be reduced, and penetration of the solid electrolyte layer by Li may be effectively suppressed.

### [Positive Electrode Active Material Layer: Inorganic Filler]

Referring to FIG. 1 to FIG. 12, the positive electrode active material layer 12 may further include an inorganic filler. The inorganic filler includes a lithium metal oxyhalide represented by LiₐAl_{b}M_{c}O_{d}Clₑ (0<a≤3; 0<b≤3; 0≤c<2; 0<d≤2; 0<e≤4; d<e, wherein M is a metal selected from Group 3 to Group 15 of the periodic table of elements).

The content of the inorganic filler included in the positive electrode active material layer 12 may be, for example, 0.1 to 20 wt%, 0.1 to 10 wt%, or 0.1 to 5 wt% based on the total weight of the positive electrode active material layer 12.

The inorganic filler included in the positive electrode active material layer 12 may be selected from among the inorganic fillers used in the solid separator 40. Specific details regarding the inorganic filler refer to the aforementioned solid separator 40.

In the positive electrode active material layer 12, the weight ratio of the first solid electrolyte to the inorganic filler may be, for example, 99:1 to 1:99, 90:1 to 10:90, 80:20 to 20:80, 70:30 to 30:70, or 60:40 to 40:60. As the first solid electrolyte and the inorganic filler have a weight ratio within this range, the all-solid-state secondary battery 1 may provide excellent cycle characteristics.

In the positive electrode active material layer 12, the content of the inorganic filler may be smaller than, for example, the content of the first solid electrolyte. In the positive electrode active material layer 12, the weight ratio of the first solid electrolyte to the inorganic filler may be 99:1 to 50:50, 99:1 to 60:40, 99:1 to 70:30, 99:1 to 80:20, or 99:1 to 90:10. As the first solid electrolyte and the inorganic filler have a weight ratio within this range, volume changes during charging/discharging of the positive electrode active material layer 12 may be more easily accommodated. As a result, cycle characteristics of the all-solid-state secondary battery 1 may be further improved.

### [Positive Electrode Active Material Layer: Conductive Material]

The positive electrode active material layer 12 may further include a conductive material. The conductive material may be, for example, a carbon-based material, a metal-based material, or a combination thereof.

The content of the conductive material included in the positive electrode active material layer 12 may be, for example, 1 wt% to 30 wt%, 1 wt% to 20 wt%, or 1 wt% to 10 wt% based on the total weight of the positive electrode active material layer 12.

The metal-based material may be a metal powder, a metal fiber, or a combination thereof, but is not limited thereto, and any metal-based material used as a conductive material in the art may be used.

The carbon-based material may include, for example, amorphous carbon. As the carbon-based material includes amorphous carbon, side reactions between the carbon-based material and the first solid electrolyte may be suppressed. Accordingly, cycle characteristics of the all-solid-state secondary battery 1 including the carbon-based material may be further improved.

The carbon-based material may be, for example, a calcined product of a carbon precursor. The carbon-based material may be, for example, a carbon nanostructure. The carbon nanostructure may be, for example, a one-dimensional carbon nanostructure, a two-dimensional carbon nanostructure, a three-dimensional carbon nanostructure, or a combination thereof. The carbon nanostructure may be, for example, carbon nanotubes, carbon nanofibers, carbon nanobelts, carbon nanorods, graphene, or a combination thereof. The carbon-based material may be, for example, a porous carbon-based material or a non-porous carbon-based material. The porous carbon-based material may include, for example, periodic and regular two-dimensional or three-dimensional pores. The porous carbon-based material may be, for example, carbon black such as ketjen black, acetylene black, denka black, thermal black, and channel black; graphite, activated carbon, or a combination thereof. The form of the carbon-based material may be, for example, a particle form, a sheet form, a flake form, etc., but is not limited thereto, and any form used as a carbon-based material in the art may be used.

The carbon-based material may include, for example, a fibrous carbon-based material. As the composite includes the fibrous carbon-based material, electron conductivity of the composite may be further improved. As the composite includes the fibrous carbon-based material, electron conduction may be more easily performed from the surface to the inside of the composite. Internal resistance of the composite positive electrode active material including the composite may be reduced, and cycle characteristics of a secondary battery including the composite positive electrode active material may be further improved. The aspect ratio of the fibrous carbon-based material may be, for example, 2 or more, 3 or more, 4 or more, 5 or more, 10 or more, or 20 or more. The aspect ratio of the fibrous carbon-based material may be, for example, 2 to 30, 3 to 30, 4 to 30, 5 to 30, 10 to 30, or 20 to 30. The aspect ratio of the fibrous carbon-based material may be, for example, 2 to 30, 2 to 20, 2 to 10, 2 to 8, 2 to 5, or 2 to 4. As the fibrous carbon-based material has an aspect ratio within this range, overall electron conductivity of the composite may be improved, and imbalance in local electron conductivity within the composite may be further alleviated. The fibrous carbon-based material may include, for example, a carbon nanostructure. The carbon nanostructure may include, for example, carbon nanofibers (CNF), carbon nanotubes (CNT), carbon nanobelts, carbon nanorods, or a combination thereof. The carbon nanostructure may form a primary carbon nanostructure including one carbon nanostructure and a secondary carbon nanostructure in which a plurality of carbon nanostructures are aggregated. The aspect ratio of the fibrous carbon-based material may be measured, for example, from scanning electron microscope (SEM) images or transmission electron microscope (TEM) images.

The diameter of the primary carbon nanostructure may be, for example, 1 nm to 200 nm, 1 nm to 150 nm, 1 nm to 100 nm, 1 nm to 50 nm, 1 nm to 30 nm, or 1 nm to 20 nm. The length of the primary carbon nanostructure may be, for example, 10 nm to 2 µm, 10 nm to 1.5 µm, 10 nm to 1 µm, 10 nm to 500 nm, 10 nm to 400 nm, 10 nm to 300 nm, 10 nm to 200 nm, or 10 nm to 100 nm. The diameter and length of the primary carbon nanostructure may be measured from scanning electron microscope (SEM) images or transmission electron microscope (TEM) images. Alternatively, the diameter and/or length of the primary carbon nanostructure may be measured by laser diffraction.

The secondary carbon nanostructure is, for example, a structure formed by aggregating primary carbon nanostructures such that the primary carbon nanostructures wholly or partially form a bundle-type or rope-type. The secondary carbon nanostructure may include, for example, a bundle-type carbon nanostructure, a rope-type carbon nanostructure, or a combination thereof. The diameter of the secondary carbon nanostructure may be, for example, 2 nm to 200 nm, 3 nm to 150 nm, 5 nm to 100 nm, 5 nm to 50 nm, 5 nm to 30 nm, or 5 nm to 20 nm. The length of the secondary carbon nanotube structure may be, for example, 20 nm to 2 µm, 30 nm to 1.5 µm, 50 nm to 1 µm, 50 nm to 500 nm, 50 nm to 400 nm, 50 nm to 300 nm, 50 nm to 200 nm, or 50 nm to 100 nm or more. The diameter and length of the secondary carbon nanostructure may be measured from scanning electron microscope (SEM) images or an optical microscope. Alternatively, the diameter and/or length of the secondary carbon nanostructure may be measured by laser diffraction. The secondary carbon nanostructure may be dispersed in, for example, a solvent and converted into a primary carbon nanostructure before being used for preparation of the composite.

### [Positive Electrode Active Material Layer: Binder]

The positive electrode active material layer 12 may further include a binder. The binder may be, for example, styrene butadiene rubber (SBR), polytetrafluoroethylene (PTFE), polyvinylidene fluoride (PVDF), polyethylene (PE), or a combination thereof, but is not limited thereto, and any material used as a binder in the art may be used. The content of the binder included in the positive electrode active material layer 12 may be, for example, 0.1 wt% to 10 wt%, 0.5 to 5 wt%, or 0.5 to 2 wt% based on the total weight of the positive electrode active material layer 12. The binder may be omitted.

### [Positive Electrode Active Material Layer: Other Additives]

The positive electrode active material layer 12 may further include additives such as a filler, a coating agent, a dispersant, and an ion-conductive aid, in addition to the aforementioned positive electrode active material, solid electrolyte, binder, and conductive material.

As the filler, coating agent, dispersant, ion-conductive aid, and the like that may be included in the positive electrode active material layer 12, known materials generally used in electrodes of all-solid-state secondary batteries may be used.

### [Interlayer]

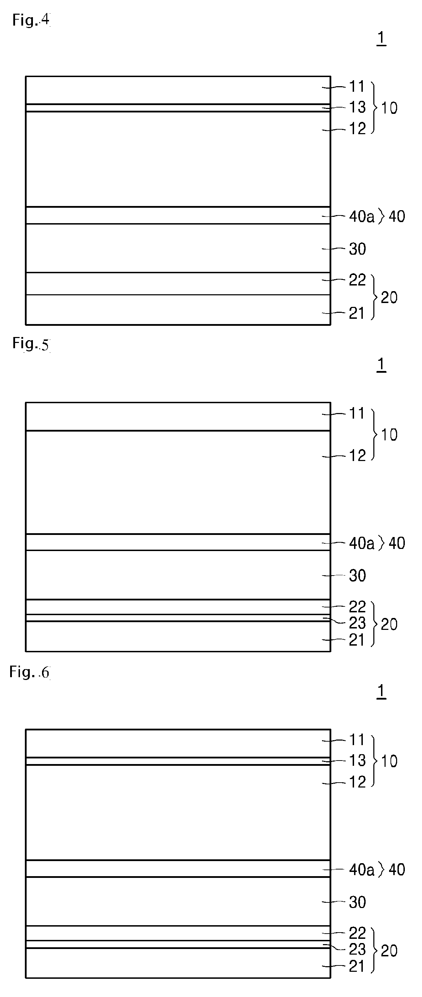

Referring to FIGS. 4, 6, 8, 10, and 12, the positive electrode 10 further includes an interlayer 13 disposed between the positive electrode current collector 11 and the positive electrode active material layer 12.

The interlayer 13 is directly disposed on, for example, one surface or both surfaces of the positive electrode current collector 11. Another layer may not be disposed between the positive electrode current collector 11 and the interlayer 13. As the interlayer 13 is directly disposed on one surface or both surfaces of the positive electrode current collector 11, adhesion between the positive electrode current collector 11 and the positive electrode active material layer 12 may be further improved. As the interlayer 13 is disposed between the positive electrode current collector 11 and the positive electrode active material layer 12, side reactions between the inorganic filler and/or the first solid electrolyte and the positive electrode current collector 11 may be more effectively suppressed. Accordingly, degradation of the all-solid-state secondary battery 1 during charging/discharging processes may be suppressed, and cycle characteristics of the all-solid-state secondary battery 1 may be further improved.

The thickness of the interlayer 13 may be, for example, 0.01 to 20 %, 0.1 to 20 %, 0.5 to 20 %, 1 to 20 %, 1 to 15 %, 1 to 10 %, 2 to 8 %, or 3 to 7 % of the thickness of the positive electrode current collector 11. The thickness of the interlayer 13 may be, for example, 10 nm to 5 µm, 50 nm to 5 µm, 200 nm to 4 µm, 500 nm to 3 µm, 500 nm to 2 µm, 500 nm to 1.5 µm, or 700 nm to 1.3 µm. As the interlayer 13 has a thickness within these ranges, adhesion between the positive electrode current collector 11 and the positive electrode active material layer 12 may be further improved, and an increase in interfacial resistance may be suppressed. The thickness of the interlayer may be measured from, for example, a scanning electron microscope (SEM) image of a cross-section of the interlayer.

The interlayer 13 includes, for example, a carbon-based conductive material. The carbon-based conductive material included in the interlayer 13 may be selected from among the carbon-based conductive materials used in the positive electrode active material layer 12. The interlayer 13 may include the same carbon-based conductive material as the carbon-based conductive material used in the positive electrode active material layer 12. As the interlayer 13 includes the carbon-based conductive material, the interlayer 13 may be, for example, a conductive layer.

The interlayer 13 may additionally include, for example, a binder. As the interlayer 13 additionally includes the binder, adhesion between the positive electrode current collector 11 and the positive electrode active material layer 12 may be further improved. The binder included in the interlayer 13 may be, for example, a conductive binder or a non-conductive binder. The conductive binder may be, for example, an ion-conductive binder and/or an electron conductive binder. A binder having both ion conductivity and electron conductivity may belong to both an ion-conductive binder and an electron conductive binder.

The binder included in the interlayer 13 may be selected from among the binders used in the positive electrode active material layer 12. The interlayer 13 may include the same binder as the binder used in the positive electrode active material layer 12. The binder included in the interlayer 13 may be, for example, a fluorine-based binder. The fluorine-based binder included in the interlayer 13 may be, for example, polyvinylidene fluoride (PVDF), polytetrafluoroethylene (PTFE), or a combination thereof. The interlayer 13 may be, for example, an adhesive layer including a binder. The interlayer 13 may be, for example, a conductive layer including a binder and a carbon-based conductive material.

The interlayer 13 may be disposed on the positive electrode current collector 11 by, for example, a dry process or a wet process. The interlayer 13 may be disposed on the positive electrode current collector 11 by a dry process through deposition, for example, chemical vapor deposition (CVD), physical vapor deposition (PVD), or the like. The interlayer 13 may be disposed on the positive electrode current collector 11 by a wet process, for example, through spin coating, dip coating, or the like. The interlayer 13 may be disposed on the positive electrode current collector 11, for example, by depositing the carbon-based conductive material on a substrate by deposition. The dry-coated interlayer 13 may consist of the carbon-based conductive material and may not include a binder. The interlayer 13 may be disposed on the positive electrode current collector 11 by, for example, coating and drying a composition including the carbon-based conductive material, the binder, and a solvent on a surface of the electrode current collector. The interlayer 13 may have a single-layer structure or a multilayer structure including a plurality of layers. The multilayer structure may be a two-layer structure, a three-layer structure, a four-layer structure, or the like.

Referring to FIGS. 1 to 3, 5, 7, 9, and 11, the positive electrode 10 may have the positive electrode active material layer 12 directly disposed on the positive electrode current collector 11. Another layer, for example, an interlayer, may not be disposed between the positive electrode current collector 11 and the positive electrode active material layer 12.

In the positive electrode layer 10 in which the positive electrode active material layer 12 is directly disposed on the positive electrode current collector 11, the positive electrode current collector 11 may be inactive to the inorganic filler. The positive electrode current collector 11 may not undergo a side reaction with the inorganic filler. The positive electrode current collector 11 may include, for example, tungsten (W).

### [Positive Electrode Current Collector]

Referring to FIG. 1 to FIG. 12, the positive electrode layer 10 includes the positive electrode current collector 11.

The positive electrode current collector 11 may use, for example, a plate or foil consisting of indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof. The positive electrode current collector 11 may be omitted. The thickness of the positive electrode current collector 11 may be, for example, 1 µm to 100 µm, 1 µm to 50 µm, 5 µm to 25 µm, or 10 µm to 20 µm.

The positive electrode current collector 11 may include, for example, a base film and a metal layer disposed on one surface or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. As the base film includes the insulating thermoplastic polymer, the base film may soften or liquefy when a short circuit occurs, thereby shutting down battery operation and suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminium (Al), germanium (Ge), or an alloy thereof. The metal layer may function as an electrochemical fuse and may be cut off during overcurrent, thereby performing a short circuit prevention function. A limit current and a maximum current may be controlled by adjusting the thickness of the metal layer. The metal layer may be plated or deposited on the base film. As the thickness of the metal layer decreases, the limit current and/or the maximum current of the positive electrode current collector 11 decreases, thereby improving stability of the lithium battery during a short circuit. A lead tab may be added to the metal layer for external connection. The lead tab may be welded to the metal layer or a metal layer/base film laminate by ultrasonic welding, laser welding, spot welding, or the like. During welding, the base film and/or the metal layer may melt, and the metal layer may be electrically connected to the lead tab. To more firmly weld the metal layer and the lead tab, a metal chip may be added between the metal layer and the lead tab. The metal chip may be a thin piece of the same material as the metal of the metal layer. The metal chip may be, for example, a metal foil or a metal mesh. The metal chip may be, for example, an aluminium foil, a copper foil, or a SUS foil. After disposing the metal chip on the metal layer and welding the lead tab thereto, the lead tab may be welded to a metal chip/metal layer laminate or a metal chip/metal layer/base film laminate. During welding, the base film, the metal layer, and/or the metal chip may melt, and the metal layer or the metal layer/metal chip laminate may be electrically connected to the lead tab. A metal chip and/or a lead tab may be added to a portion of the metal layer. The thickness of the base film may be, for example, 1 to 50 µm, 1.5 to 50 µm, 1.5 to 40 µm, or 1 to 30 µm. As the base film has a thickness within these ranges, the weight of the electrode assembly may be more effectively reduced. The melting point of the base film may be, for example, 100 to 300 °C, 100to 250 °C or less, or 100 to 200 °C. As the base film has a melting point within these ranges, the base film may melt during welding of the lead tab and may be easily bonded to the lead tab. To improve adhesion between the base film and the metal layer, surface treatment such as corona treatment may be performed on the base film. The thickness of the metal layer may be, for example, 0.01 to 3 µm, 0.1 to 3 µm, 0.1 to 2 µm, or 0.1 to 1 µm. As the metal layer has a thickness within these ranges, conductivity may be maintained while stability of the electrode assembly is secured. The thickness of the metal chip may be, for example, 2 to 10 µm, 2 to 7 µm, or 4 to 6 µm. As the metal chip has a thickness within these ranges, connection between the metal layer and the lead tab may be more easily performed. As the positive electrode current collector 11 has such a structure, the weight of the positive electrode may be reduced, and consequently, energy density of the positive electrode and the all-solid-state secondary battery may be improved.

### [Inactive Member]

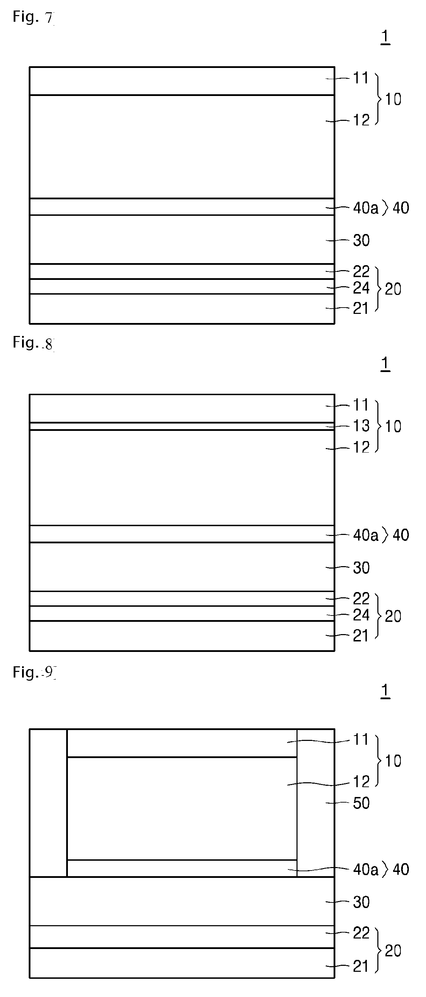

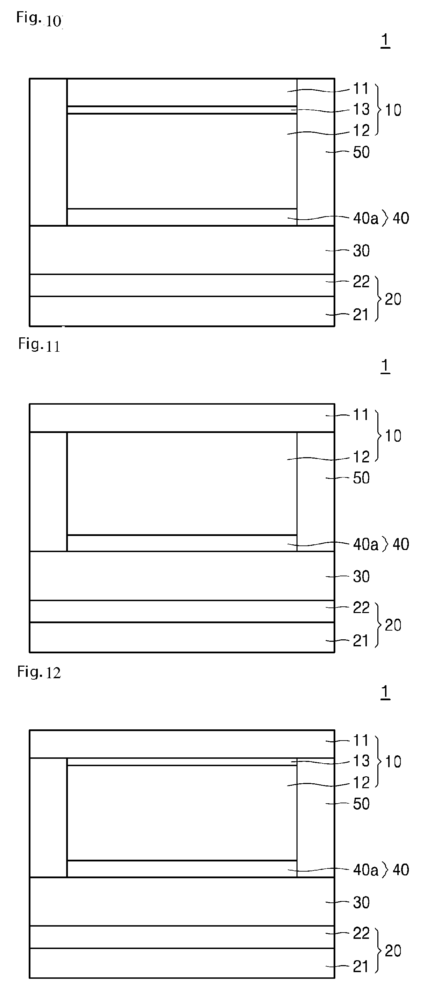

Referring to FIG. 9 to FIG. 12, the positive electrode 10 includes a positive electrode current collector 11 and a positive electrode active material layer 12 disposed on one surface of the positive electrode current collector. Referring to FIG. 10 and FIG. 12, the positive electrode 10 includes a positive electrode current collector 11, a positive electrode active material layer 12 disposed on one surface of the positive electrode current collector, and an interlayer 13 disposed between the positive electrode current collector 11 and the positive electrode active material layer 13. An inactive member 50 is disposed on one side surface of the positive electrode 10. Referring to FIG. 9 and FIG. 10, the inactive member 50 is disposed on one side surface of the positive electrode active material layer 12 and the positive electrode current collector 11. Referring to FIG. 11 and FIG. 12, the inactive member 50 is disposed on one side surface of the positive electrode active material layer 12 and disposed between the electrolyte layer 30 and the positive electrode current collector 11 opposing the electrolyte layer 30. The inactive member 50 is not disposed on one side surface of the positive electrode current collector 11. The electrolyte layer 30 may be, for example, a solid electrolyte layer.

By including the inactive member 50, cracking of the electrolyte layer 30 during manufacture and/or charge/discharge of the all-solid-state secondary battery 1 may be prevented, and consequently, cycle characteristics of the all-solid-state secondary battery 2 are improved. In the all-solid-state secondary battery 1 not including the inactive member 50, cracks may occur in the electrolyte layer 30 contacting the positive electrode 10 due to non-uniform pressure applied to the electrolyte layer 30 during manufacture and/or charge/discharge of the all-solid-state secondary battery 1, and the possibility of short circuit occurrence due to growth of lithium metal through the cracks increases.

In the all-solid-state secondary battery 1, the thickness of the inactive member 50 is greater than the thickness of the positive electrode active material layer 12 or equal to the thickness of the positive electrode active material layer 12. Alternatively, in the all-solid-state secondary battery 1, the thickness of the inactive member 50 is substantially the same as the thickness of the positive electrode 10. By the thickness of the inactive member 50 being the same as the thickness of the positive electrode 10, uniform pressure may be applied between the positive electrode 10 and the electrolyte layer 30, and the positive electrode 10 and the electrolyte layer 30 may be sufficiently brought into close contact, thereby reducing interfacial resistance between the positive electrode 10 and the electrolyte layer 30. In addition, by sufficiently sintering the electrolyte layer 30 during a pressurization manufacturing process of the all-solid-state secondary battery 1, internal resistance of the electrolyte layer 30 and the all-solid-state secondary battery 1 including the same is reduced.

The inactive member 50 surrounds a side surface of the positive electrode 10 and contacts the electrolyte layer 30. By the inactive member 50 surrounding the side surface of the positive electrode 10 and contacting the electrolyte layer 30, cracking of the electrolyte layer 30 caused by a pressure difference during a pressing process in the electrolyte layer 30 not contacting the positive electrode 20 may be effectively suppressed. The inactive member 50 surrounds the side surface of the positive electrode 10 and is separated from the negative electrode 20, more specifically, the first negative electrode active material layer 22. The inactive member 50 surrounds the side surface of the positive electrode 10, contacts the electrolyte layer 30, and is separated from the negative electrode 20. Accordingly, the possibility of occurrence of a short circuit due to physical contact between the positive electrode 10 and the first negative electrode active material layer 22 or due to overcharging of lithium may be suppressed. For example, by the inactive member 50 being disposed on one side surface of the positive electrode active material layer 12 and simultaneously disposed on one side surface of the positive electrode current collector 11, the possibility of occurrence of a short circuit due to contact between the positive electrode current collector 11 and the negative electrode 20 may be more effectively suppressed.

Referring to FIGS. 7 to 10, the inactive member 50 extends from one side surface of the positive electrode 30 to an end portion of the electrolyte layer 30. By the inactive member 50 extending to the end portion of the electrolyte layer 30, cracking occurring at the end portion of the electrolyte layer 30 may be suppressed. The end portion of the electrolyte layer 30 is an outermost portion contacting a side surface of the electrolyte layer 30. The inactive member 50 extends to the outermost portion contacting the side surface of the electrolyte layer 30. The inactive member 50 is separated from the negative electrode 20, more specifically, the first negative electrode active material layer 22. The inactive member 50 extends to the end portion of the electrolyte layer 30, but does not contact the negative electrode 20. The inactive member 50, for example, fills a space extending from one side surface of the positive electrode 30 to the end portion of the electrolyte layer 30.

Referring to FIGS. 7 to 10, a width of the inactive member 50 extending from one side surface of the positive electrode 10 to the end portion of the electrolyte layer 30 is, for example, 1 to 30 %, 1 to 25 %, 1 to 20 %, 1 to 15 %, 1 to 10 %, or 1 to 5 % of a width between one side surface of the positive electrode 10 and another side surface opposing the one side surface. When the width of the inactive member 50 is excessively large, energy density of the all-solid-state secondary battery 1 decreases. When the width of the inactive member 50 is excessively small, the effect of disposing the inactive member 50 is insignificant.

An area of the positive electrode 10 is smaller than an area of the electrolyte layer 30 contacting the positive electrode 10. The inactive member 50 is disposed to surround the side surface of the positive electrode 10 and compensates for an area difference between the positive electrode 10 and the electrolyte layer 30. By the area of the inactive member 50 compensating for the difference between the area of the positive electrode 10 and the area of the electrolyte layer 30, cracking of the electrolyte layer 30 caused by a pressure difference during a pressing process may be effectively suppressed. For example, a sum of the area of the positive electrode 10 and the area of the inactive member 50 is the same as the area of the electrolyte layer 30. The electrolyte layer 30 may be, for example, a solid electrolyte layer.

The area of the positive electrode 10 is, for example, less than 100 %, 99 % or less, 98 % or less, 97 % or less, 96 % or less, or 95 % or less of the area of the electrolyte layer 30. The area of the positive electrode 10 is, for example, 50 % to less than 100 %, 50 % to 99 %, 55 % to 98 %, 60 % to 97 %, 70 % to 96 %, 80 % to 95 %, or 85 % to 95 % of the area of the electrolyte layer 30.

When the area of the positive electrode 10 is equal to or greater than the area of the electrolyte layer 30, the possibility of occurrence of a short circuit due to physical contact between the positive electrode 10 and the first negative electrode active material layer 22 or due to overcharging of lithium increases. The area of the positive electrode 10 is, for example, the same as the area of the positive electrode active material layer 12. The area of the positive electrode 10 is, for example, the same as the area of the positive electrode current collector 11.

The area of the inactive member 50 is, for example, 50 % or less, 40 % or less, 30 % or less, 20 % or less, or 10 % or less of the area of the positive electrode 10. The area of the inactive member 50 is, for example, 1 % to 50 %, 5 % to 40 %, 5 % to 30 %, 5 % to 20 %, or 5 % to 15 % of the area of the positive electrode 10.

The area of the positive electrode 10 is smaller than the area of the negative electrode current collector 21. The area of the positive electrode 10 is, for example, less than 100 %, 99 % or less, 98 % or less, 97 % or less, 96 % or less, or 95 % or less of the area of the negative electrode current collector 21. The area of the positive electrode 10 is, for example, 50 % to less than 100 %, 50 % to 99 %, 55 % to 98 %, 60 % to 97 %, 70 % to 96 %, 80 % to 95 %, or 85 % to 95 % of the area of the negative electrode current collector 21. The area of the negative electrode current collector 21 is, for example, the same as the area of the negative electrode 20. The area of the negative electrode current collector 21 is, for example, the same as the area of the first negative electrode active material layer 22.

As used herein, the "same" area, length, width, thickness, and/or shape includes all cases having a "substantially same" area, length, width, thickness, and/or shape except for cases in which the area, length, width, thickness, and/or shape are intentionally made different from each other. The "same" area, length, width, and/or thickness includes a range in which an unintended difference in area, length, width, and/or thickness of compared objects is, for example, less than 3 %, less than 2 %, less than 1 %, less than 0.5 %, or less than 0.1 %.

The thickness of the inactive member 50 is, for example, greater than the thickness of the first negative electrode active material layer 22. The thickness of the first negative electrode active material layer 22 is, for example, 50 % or less, 40 % or less, 30 % or less, 20 % or less, or 10 % or less of the thickness of the inactive member 50. The thickness of the first negative electrode active material layer 22 is, for example, 1 % to 50 %, 1 % to 40 %, 1 % to 30 %, 1 % to 20 %, or 1 % to 10 % of the thickness of the inactive member 50.

The inactive member 50 may be a gasket. By using a gasket as the inactive member 50, cracking of the electrolyte layer 30 caused by a pressure difference during a pressing process may be effectively suppressed.

The inactive member 50 has, for example, a single-layer structure. Alternatively, although not illustrated in the drawings, the inactive member 50 may have a multilayer structure. In the inactive member 50 having a multilayer structure, respective layers may have different compositions from each other. The inactive member having a multilayer structure may have, for example, a 2-layer structure, a 3-layer structure, a 4-layer structure, or a 5-layer structure. The inactive member 50 having a multilayer structure may include, for example, one or more adhesive layers and one or more support layers. The adhesive layer effectively prevents separation between the positive electrode 10 and the electrolyte layer 30 due to volume change of the positive electrode 10 occurring during charge/discharge of the all-solid-state secondary battery 10, and improves film strength of the inactive member 50 by providing adhesion between the support layer and another layer. The support layer provides support force to the inactive member 50, prevents non-uniformity of pressure applied on the electrolyte layer 30 during a pressing process or a charge/discharge process, and prevents deformation of the manufactured all-solid-state secondary battery 1.

The inactive member 50 is, for example, a flame-retardant inactive member. By the flame-retardant inactive member providing flame retardancy, thermal runaway and ignition possibility of the all-solid-state secondary battery 1 may be prevented. Consequently, safety of the all-solid-state secondary battery 1 is further improved. By the flame-retardant inactive member absorbing residual moisture in the all-solid-state secondary battery 1, degradation of the all-solid-state secondary battery 1 is prevented, thereby improving lifespan characteristics of the all-solid-state secondary battery 1. The flame-retardant inactive member may include a matrix and an additive. The matrix and additive may be selected from among matrices and additives used in the solid separator. More specific details regarding the matrix and additive refer to the aforementioned solid separator.

The inactive member 50 is a member that does not include a material having electrochemical activity, for example, an electrode active material. The electrode active material is a material that intercalates/deintercalates lithium. The inactive member 50 is a member consisting of a material other than an electrode active material and used in the art.

### [Negative Electrode Layer]

### [First Negative Electrode Active Material Layer: Negative Electrode Active Material]

Referring to FIGS. 1 to 12, the negative electrode 20 includes a first negative electrode active material layer 22. The first negative electrode active material layer 22 includes, for example, a negative electrode active material and a binder.

The negative electrode active material included in the first negative electrode active material layer 22 is, for example, a negative electrode material capable of forming an alloy or compound with lithium.

The negative electrode active material included in the first negative electrode active material layer 22 has, for example, a particle form. An average particle diameter of the particle-form negative electrode active material is, for example, 4 µm or less, 3 µm or less, 2 µm or less, 1 µm or less, 500 nm or less, 300 nm or less, or 100 nm or less. The average particle diameter of the particle-form negative electrode active material is, for example, 10 nm to 4 µm, 10 nm to 3 µm, 10 nm to 2 µm, 10 nm to 1 µm, 10 nm to 500 nm, 10 nm to 300 nm, or 10 nm to 100 nm. By the negative electrode active material having an average particle diameter within these ranges, reversible absorbing and/or desorbing of lithium during charge/discharge may be further facilitated. The average particle diameter of the negative electrode active material is, for example, a median diameter (D50) measured using a laser diffraction particle size analyzer.

The negative electrode active material included in the first negative electrode active material layer 22 includes, for example, one or more selected from among carbon-based negative electrode active materials and metal or metalloid negative electrode active materials.

The carbon-based negative electrode active material includes, for example, amorphous carbon, crystalline carbon, porous carbon, or a combination thereof.

The carbon-based negative electrode active material is particularly amorphous carbon. The amorphous carbon includes, for example, carbon black (CB), acetylene black (AB), furnace black (FB), ketjen black (KB), graphene, or the like, but is not necessarily limited thereto, and any material classified as amorphous carbon in the art may be used. The amorphous carbon is carbon having no crystallinity or very low crystallinity and is distinguished from crystalline carbon or graphite-based carbon.

The carbon-based negative electrode active material may be, for example, porous carbon. A pore volume included in the porous carbon is, for example, 0.1 cc/g to 10.0 cc/g, 0.5 cc/g to 5 cc/g, or 0.1 cc/g to 1 cc/g. An average pore diameter included in the porous carbon is, for example, 1 nm to 50 nm, 1 nm to 30 nm, or 1 nm to 10 nm. A BET specific surface area of the porous carbon is, for example, 100 m2/g to 3000 m2/g. The pore volume, average pore diameter, and BET specific surface area of the porous carbon may be measured, for example, by a nitrogen gas adsorption method.

The metal or metalloid negative electrode active material includes one or more selected from the group consisting of gold (Au), platinum (Pt), palladium (Pd), silicon (Si), silver (Ag), aluminium (Al), bismuth (Bi), tin (Sn), and zinc (Zn), but is not necessarily limited thereto, and any metal negative electrode active material or metalloid negative electrode active material used in the art that forms an alloy or compound with lithium may be used. For example, nickel (Ni) is not a metal negative electrode active material because it does not form an alloy with lithium.

The first negative electrode active material layer 22 includes one type of negative electrode active material among these negative electrode active materials or includes a mixture of a plurality of different negative electrode active materials. For example, the first negative electrode active material layer 22 includes only amorphous carbon or includes one or more selected from the group consisting of gold (Au), platinum (Pt), palladium (Pd), silicon (Si), silver (Ag), aluminium (Al), bismuth (Bi), tin (Sn), and zinc (Zn). Alternatively, the first negative electrode active material layer 22 includes a mixture of amorphous carbon and one or more selected from the group consisting of gold (Au), platinum (Pt), palladium (Pd), silicon (Si), silver (Ag), aluminium (Al), bismuth (Bi), tin (Sn), and zinc (Zn). A mixing ratio of the mixture of amorphous carbon and gold or the like is, for example, 99:1 to 1:99, 10:1 to 1:2, 5:1 to 1:1, or 4:1 to 2:1 by weight ratio, but is not necessarily limited to these ranges and is selected according to required characteristics of the all-solid-state secondary battery 1. By the negative electrode active material having such a composition, cycle characteristics of the all-solid-state secondary battery 1 are further improved.

The negative electrode active material included in the first negative electrode active material layer 22 includes, for example, a mixture of first particles consisting of amorphous carbon and second particles consisting of a metal or metalloid. The metal or metalloid includes, for example, gold (Au), platinum (Pt), palladium (Pd), silicon (Si), silver (Ag), aluminium (Al), bismuth (Bi), tin (Sn), zinc (Zn), or the like. The metalloid is alternatively a semiconductor. A content of the second particles is 1 to 99 wt%, 1 to 60 wt%, 8 to 60 wt%, 10 to 50 wt%, 15 to 40 wt%, or 20 to 30 wt%, based on the total weight of the mixture. By the second particles having a content within these ranges, cycle characteristics of, for example, the all-solid-state secondary battery 1 are further improved.

Alternatively, the first negative electrode active material layer 22 includes a composite negative electrode active material. The composite negative electrode active material includes, for example, a carbon-based support and a metal-based negative electrode active material supported on the carbon-based support. By the composite negative electrode active material having such a structure, localization of the metal-based negative electrode active material within the first negative electrode active material layer may be prevented and a uniform distribution may be obtained. Consequently, cycle characteristics of the all-solid-state secondary battery 1 including the first negative electrode active material layer 22 are further improved.

The metal-based negative electrode active material supported on the carbon-based support includes, for example, a metal, a metal oxide, a composite of a metal and a metal oxide, or a combination thereof. The metal includes, for example, gold (Au), platinum (Pt), palladium (Pd), silicon (Si), silver (Ag), aluminium (Al), bismuth (Bi), tin (Sn), tellurium (Te), zinc (Zn), or the like. The metal oxide includes, for example, gold (Au) oxide, platinum (Pt) oxide, palladium (Pd) oxide, silicon (Si) oxide, silver (Ag) oxide, aluminium (Al) oxide, bismuth (Bi) oxide, tin (Sn) oxide, tellurium (Te) oxide, zinc (Zn) oxide, or the like. The metal oxide includes, for example, AuₓO_{y} (0<x≤2, 0<y≤3), PtₓO_{y} (0<x≤1, 0<y≤2), PdₓO_{y} (0<x≤1, 0<y≤1), SiₓO_{y} (0<x≤1, 0<y≤2), AgₓO_{y} (0<x≤2, 0<y≤1), AlₓO_{y} (0<x≤2, 0<y≤3), BiₓO_{y} (0<x≤2, 0<y≤3), SnₓO_{y} (0<x≤1, 0<y≤2), TeₓO_{y} (0<x≤1, 0<y≤3), ZnₓO_{y} (0<x≤1, 0<y≤1), or a combination thereof. The composite of a metal and a metal oxide includes, for example, a composite of Au and AuₓO_{y} (0<x≤2, 0<y≤3), a composite of Pt and PtₓO_{y} (0<x≤1, 0<y≤2), a composite of Pd and PdₓO_{y} (0<x≤1, 0<y≤1), a composite of Si and SiₓO_{y} (0<x≤1, 0<y≤2), a composite of Ag and AgₓO_{y} (0<x≤2, 0<y≤1), a composite of Al and AlₓO_{y} (0<x≤2, 0<y≤3), a composite of Bi and BiₓO_{y} (0<x≤2, 0<y≤3), a composite of Sn and SnₓO_{y} (0<x≤1, 0<y≤2), a composite of Te and TeₓO_{y} (0<x≤1, 0<y≤3), a composite of Zn and ZnₓO_{y} (0<x≤1, 0<y≤1), or a combination thereof.

The carbon-based support is, for example, amorphous carbon. The amorphous carbon includes, for example, carbon black (CB), acetylene black (AB), furnace black (FB), ketjen black (KB), graphene, activated carbon, carbon nanofiber (CNF), carbon nanotube (CNT), or the like, but is not necessarily limited thereto, and any material classified as amorphous carbon in the art may be used. The amorphous carbon is carbon having no crystallinity or very low crystallinity and is distinguished from crystalline carbon or graphite-based carbon. The carbonaceous material is, for example, a carbon-based negative electrode active material.

The composite negative electrode active material has, for example, a particle form. A particle diameter of the particle-form composite negative electrode active material is, for example, 10 nm to 4 µm, 10 nm to 1 µm, 10 nm to 500 nm, 10 nm to 200 nm, or 10 nm to 100 nm. By the composite negative electrode active material having a particle diameter within these ranges, reversible absorbing and/or desorbing of lithium during charge/discharge may be further facilitated. The metal-based negative electrode active material supported on the support may have, for example, a particle form. A particle diameter of the metal-based negative electrode active material is, for example, 1 nm to 200 nm, 1 nm to 150 nm, 5 nm to 100 nm, or 10 nm to 50 nm. The carbon-based support may have, for example, a particle form. A particle diameter of the carbon-based support is, for example, 10 nm to 2 µm, 10 nm to 1 µm, 10 nm to 500 nm, 10 nm to 200 nm, or 10 nm to 100 nm. By having a particle diameter within these ranges, the carbon-based support may be more uniformly disposed within the first negative electrode active material layer. The carbon-based support may be, for example, nanoparticles having a particle diameter of 500 nm or less. The particle diameter of the composite negative electrode active material, the particle diameter of the metal-based negative electrode active material, and the particle diameter of the carbon-based support are, for example, average particle diameters. The average particle diameter is, for example, a median diameter (D50) measured using a laser diffraction particle size analyzer. Alternatively, the average particle diameter may be automatically determined using software from an electron microscope image or may be manually determined.

### [First Negative Electrode Active Material Layer: Binder]

The first negative electrode active material layer 22 includes a binder. The binder includes, for example, styrene-butadiene rubber (SBR), polytetrafluoroethylene, polyvinylidene fluoride, polyethylene, vinylidene fluoride/hexafluoropropylene copolymer, polyacrylonitrile, polymethyl methacrylate, or the like, but is not necessarily limited thereto, and any material used as a binder in the art may be used. The binder may consist of a single or a plurality of different binders.

By the first negative electrode active material layer 22 including a binder, the first negative electrode active material layer 22 is stabilized on the negative electrode current collector 21. In addition, cracking of the first negative electrode active material layer 22 is suppressed despite volume change and/or relative positional change of the first negative electrode active material layer 22 during charge/discharge. For example, when the first negative electrode active material layer 22 does not include a binder, the first negative electrode active material layer 22 may be easily separated from the negative electrode current collector 21. By the first negative electrode active material layer 22 being detached from the negative electrode current collector 21, in a portion where the negative electrode current collector 21 is exposed, the negative electrode current collector 21 contacts the electrolyte layer 30, thereby increasing the possibility of occurrence of a short circuit. The first negative electrode active material layer 22 is manufactured, for example, by applying a slurry in which materials constituting the first negative electrode active material layer 22 are dispersed onto the negative electrode current collector 21 and drying the same. By including the binder in the first negative electrode active material layer 22, stable dispersion of the negative electrode active material in the slurry is possible. For example, when the slurry is applied onto the negative electrode current collector 21 by a screen printing method, clogging of the screen (for example, clogging due to agglomerates of the negative electrode active material) may be suppressed.

### [First Negative Electrode Active Material Layer: Other Additives]

The first negative electrode active material layer 22 may further include additives used in conventional all-solid-state secondary batteries 1, for example, fillers, coating agents, dispersants, ion-conductive aids, and the like.

### [First Negative Electrode Active Material Layer: Solid Electrolyte]

The first negative electrode active material layer 22 may further include a solid electrolyte. The solid electrolyte may be, for example, a material selected from among solid electrolytes included in the electrolyte layer 30. The solid electrolyte included in the first negative electrode active material layer 22 may serve as a reaction site where formation of lithium metal begins within the first negative electrode active material layer 22, may serve as a space in which formed lithium metal is stored, or may serve as a path for transferring lithium ions. The solid electrolyte may be omitted.

In the first negative electrode active material layer 22, a content of the solid electrolyte may be, for example, higher in a region adjacent to the electrolyte layer 30 and lower in a region adjacent to the negative electrode current collector 21. In the first negative electrode active material layer 22, the solid electrolyte, for example, may have a concentration gradient in which a concentration decreases from a region adjacent to the electrolyte layer 30 to a region adjacent to the negative electrode current collector 21.

### [First Negative Electrode Active Material Layer: Charging Capacity]

A ratio (B/A) of an initial charging capacity (B) of the first negative electrode active material layer 22 to an initial charging capacity (A) of the positive electrode active material layer is 0.005 to 0.45. The initial charging capacity of the positive electrode active material layer 12 is determined by charging from a 1st open circuit voltage to a maximum charging voltage with respect to Li/Li+. The initial charging capacity of the first negative electrode active material layer 22 is determined by charging from a 2nd open circuit voltage to 0.01 V with respect to Li/Li+.

The maximum charging voltage is determined according to the type of positive electrode active material. The maximum charging voltage may be, for example, 1.5 V, 2.0 V, 2.5 V, 3.0 V, 3.5 V, 4.0 V, 4.2 V, or 4.3 V. For example, the maximum charging voltage of Li2S or a Li2S composite may be 2.5 V with respect to Li/Li+. For example, the maximum charging voltage of Li2S or a Li2S composite may be 3.0 V with respect to Li/Li+. The ratio (B/A) of the initial charging capacity (B) of the first negative electrode active material layer 22 to the initial charging capacity (A) of the positive electrode active material layer may be, for example, 0.01 to 0.3, 0.01 to 0.2, or 0.05 to 0.1. The initial charging capacity (mAh) of the positive electrode active material layer 12 is obtained by multiplying a charge specific capacity (mAh/g) of the positive electrode active material by a mass (g) of the positive electrode active material in the positive electrode active material layer 12. When a plurality of types of positive electrode active materials are used, a charge specific capacity × mass value is calculated for each positive electrode active material, and a sum of these values is the initial charging capacity of the positive electrode active material layer 12. The initial charging capacity of the first negative electrode active material layer 22 is also calculated in the same manner. The initial charging capacity of the first negative electrode active material layer 22 is obtained by multiplying a charge specific capacity (mAh/g) of the negative electrode active material by a mass of the negative electrode active material in the first negative electrode active material layer 22. When a plurality of types of negative electrode active materials are used, a charge specific capacity × mass value is calculated for each negative electrode active material, and a sum of these values is the initial charging capacity of the first negative electrode active material layer 22. The charge specific capacity of each of the positive electrode active material and the negative electrode active material may be measured using an all-solid-state half-cell using lithium metal as a counter electrode.

The initial charging capacities of each of the positive electrode active material layer 12 and the first negative electrode active material layer 22 may be directly measured using an all-solid-state half-cell at a constant current density, for example, 0.1 mA/cm2. With respect to the positive electrode, the measurement may be performed by charging from a 1st open circuit voltage (OCV) to an operating voltage up to a maximum charging voltage, for example, 3.0 V (vs. Li/Li+). With respect to the negative electrode, the measurement may be performed by charging from a 2nd open circuit voltage (OCV) to an operating voltage up to 0.01 V with respect to the negative electrode, for example, lithium metal. For example, an all-solid-state half-cell having the positive electrode active material layer may be charged at a constant current of 0.1 mA/cm2 from the 1st open circuit voltage to 3.0 V, and an all-solid-state half-cell having the first negative electrode active material layer may be charged at a constant current of 0.1 mA/cm2 from the 2nd open circuit voltage to 0.01 V. The current density during constant current charging may be, for example, 0.2 mA/cm2 or 0.5 mA/cm2. The all-solid-state half-cell having the positive electrode active material layer may be charged from the first open voltage to, for example, 2.5 V, 2.0 V, 3.5 V, or 4.0 V. The maximum charging voltage of the positive electrode active material layer may be determined by a maximum voltage of a battery satisfying safety conditions according to JISC8712:2015 of the Japanese Standards Association.

When the initial charging capacity of the first negative electrode active material layer 22 is excessively small, the thickness of the first negative electrode active material layer 22 becomes very thin, and thus lithium dendrites formed between the first negative electrode active material layer 22 and the negative electrode current collector 21 during repeated charging/discharging processes collapse the first negative electrode active material layer 22, such that it is difficult to improve cycle characteristics of the all-solid-state secondary battery 1. When the charging capacity of the first negative electrode active material layer 22 is excessively increased, an energy density of the all-solid-state secondary battery 1 decreases, and internal resistance of the all-solid-state secondary battery 1 due to the first negative electrode active material layer 22 increases, such that it is difficult to improve cycle characteristics of the all-solid-state secondary battery 1.

A thickness of the first negative electrode active material layer 22 is, for example, 50 % or less, 40 % or less, 30 % or less, 20 % or less, 10 % or less, or 5 % or less of a thickness of the positive electrode active material layer 12. The thickness of the first negative electrode active material layer 22 is, for example, 1 to 50 %, 1 to 40 %, 1 to 30 %, 1 to 20 %, 1 to 10 %, or 1 to 5 % of the thickness of the positive electrode active material layer 12. The thickness of the first negative electrode active material layer 22 is, for example, 1 µm to 20 µm, 2 µm to 15 µm, or 3 µm to 10 µm. When the thickness of the first negative electrode active material layer 22 is excessively thin, lithium dendrites formed between the first negative electrode active material layer 22 and the negative electrode current collector 21 collapse the first negative electrode active material layer 22, such that it is difficult to improve cycle characteristics of the all-solid-state secondary battery 1. When the thickness of the first negative electrode active material layer 22 is excessively increased, the energy density of the all-solid-state secondary battery 1 decreases, and internal resistance of the all-solid-state secondary battery 1 due to the first negative electrode active material layer 22 increases, such that it is difficult to improve cycle characteristics of the all-solid-state secondary battery 1. When the thickness of the first negative electrode active material layer 22 decreases, for example, the initial charging capacity of the first negative electrode active material layer 22 also decreases.

### [Second Negative Electrode Active Material Layer]

Referring to FIGS. 7 to 8, after being charged, the all-solid-state secondary battery 1 further includes, for example, a second negative electrode active material layer 24 disposed between the negative electrode current collector 21 and the first negative electrode active material layer 22. The second negative electrode active material layer 24 is a metal layer including lithium or a lithium alloy. The metal layer includes lithium or a lithium alloy. Accordingly, since the second negative electrode active material layer 24 is a metal layer including lithium, the second negative electrode active material layer 24 acts as, for example, a lithium reservoir. The lithium alloy may be, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like, but is not limited thereto, and any material used as a lithium alloy in the art may be used. The second negative electrode active material layer 24 may consist of one of these alloys or lithium, or may consist of various types of alloys. The second negative electrode active material layer 24 may be, for example, a plated layer. The second negative electrode active material layer 24 may be precipitated between the first negative electrode active material layer 22 and the negative electrode current collector 21 during a charging process of, for example, the all-solid-state secondary battery 1.

A thickness of the second negative electrode active material layer 24 is not particularly limited, but is, for example, 1 µm to 500 µm, 1 µm to 200 µm, 1 µm to 150 µm, 1 µm to 100 µm, or 1 µm to 50 µm. When the thickness of the second negative electrode active material layer 24 is excessively thin, it is difficult for the second negative electrode active material layer 24 to function as a lithium reservoir. When the thickness of the second negative electrode active material layer 24 is excessively thick, mass and volume of the all-solid-state secondary battery 1 increase, and cycle characteristics of the all-solid-state secondary battery 1 may rather deteriorate.

Alternatively, in the all-solid-state secondary battery 1, the second negative electrode active material layer 24, for example, may be disposed between the negative electrode current collector 21 and the first negative electrode active material layer 22 before assembly of the all-solid-state secondary battery 1. When the second negative electrode active material layer 24 is disposed between the negative electrode current collector 21 and the first negative electrode active material layer 22 before assembly of the all-solid-state secondary battery 1, since the second negative electrode active material layer 24 is a metal layer including lithium, the second negative electrode active material layer 24 acts as a lithium reservoir. For example, a lithium foil may be disposed between the negative electrode current collector 21 and the first negative electrode active material layer 22 before assembly of the all-solid-state secondary battery 1.

When the second negative electrode active material layer 24 is precipitated by charging after assembly of the all-solid-state secondary battery 1, since the second negative electrode active material layer 24 is not included during assembly of the all-solid-state secondary battery 1, the energy density of the all-solid-state secondary battery 1 increases. During charging of the all-solid-state secondary battery 1, charging is performed beyond the charging capacity of the first negative electrode active material layer 22. That is, the first negative electrode active material layer 22 is overcharged. In an initial stage of charging, lithium is absorbed into the first negative electrode active material layer 22. The negative electrode active material included in the first negative electrode active material layer 22 forms an alloy or compound with lithium ions moved from the positive electrode 10. When charging is performed beyond the capacity of the first negative electrode active material layer 22, lithium is precipitated, for example, on a rear surface of the first negative electrode active material layer 22, that is, between the negative electrode current collector 21 and the first negative electrode active material layer 22, and a metal layer corresponding to the second negative electrode active material layer 24 is formed by the precipitated lithium. The second negative electrode active material layer 24 is a metal layer mainly consisting of lithium (that is, metallic lithium). This result is obtained because, for example, the negative electrode active material included in the first negative electrode active material layer 22 includes a material forming an alloy or compound with lithium. During discharging, lithium in the first negative electrode active material layer 22 and the second negative electrode active material layer 24, that is, the metal layer, is ionized and moved toward the positive electrode 10. Accordingly, in the all-solid-state secondary battery 1, lithium may be used as the negative electrode active material. In addition, since the first negative electrode active material layer 22 covers the second negative electrode active material layer 24, the first negative electrode active material layer 22 acts as a protective layer of the second negative electrode active material layer 24, that is, the metal layer, and simultaneously suppresses precipitation growth of lithium dendrites. Accordingly, short circuiting and capacity reduction of the all-solid-state secondary battery 1 are suppressed, and consequently cycle characteristics of the all-solid-state secondary battery 1 are improved. In addition, when the second negative electrode active material layer 24 is disposed by charging after assembly of the all-solid-state secondary battery 1, the negative electrode 20, that is, the negative electrode current collector 21, the first negative electrode active material layer 22, and a region therebetween are a Li-free region not including lithium (Li) in an initial state or a fully discharged state of the all-solid-state secondary battery 1.

### [Negative Electrode Current Collector]

The negative electrode layer 20 includes a negative electrode current collector 21. The negative electrode current collector 21 consist of, for example, a material that does not react with lithium, that is, does not form either an alloy or a compound. The material constituting the negative electrode current collector 21 may be, for example, copper (Cu), stainless steel, titanium (Ti), iron (Fe), cobalt (Co), nickel (Ni), or the like, but is not limited thereto, and any material used as an electrode current collector in the art may be used. The negative electrode current collector 21 may consist of one of the aforementioned metals, or may consist of an alloy or covering material of two or more metals. The negative electrode current collector 21 is, for example, in a plate or foil form.

Referring to FIG. 5 to FIG. 6, the all-solid-state secondary battery 1 may further include a thin film 23 including an element capable of forming an alloy with lithium on one surface of the negative electrode current collector 21. The thin film 23 is disposed between the negative electrode current collector 21 and the first negative electrode active material layer 22. The thin film 23 includes, for example, an element capable of forming an alloy with lithium. The element capable of forming an alloy with lithium may be, for example, gold, silver, zinc, tin, indium, silicon, aluminium, bismuth, or the like, but is not limited thereto, and any element capable of forming an alloy with lithium in the art may be used. The thin film 23 may consist of one of these metals or may consist of an alloy of various types of metals. As the thin film 23 is disposed on one surface of the negative electrode current collector 21, a precipitation form of the second negative electrode active material layer 24 precipitated between the thin film 23 and the first negative electrode active material layer 22 becomes flatter, for example, and cycle characteristics of the all-solid-state secondary battery 1 may be further improved.

A thickness of the thin film 23 is, for example, 1 nm to 800 nm, 10 nm to 700 nm, 50 nm to 600 nm, or 100 nm to 500 nm. When the thickness of the thin film 23 is less than 1 nm, it may be difficult to perform the function of the thin film 23. When the thickness of the thin film 23 is excessively thick, the thin film 23 itself absorbs lithium, thereby decreasing an amount of precipitated lithium at the negative electrode, reducing an energy density of the all-solid-state battery, and deteriorating cycle characteristics of the all-solid-state secondary battery 1. The thin film 23 may be disposed on the negative electrode current collector 21 by, for example, vacuum deposition method, sputtering method, plating method, or the like, but is not limited thereto, and any method capable of forming the thin film 23 in the art may be used.

Although not illustrated in the drawings, the negative electrode current collector 21 may include, for example, a base film and a metal layer disposed on one surface or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. As the base film includes an insulating thermoplastic polymer, when a short circuit occurs, the base film is softened or liquefied to shutdown operation of the battery, thereby suppressing a rapid increase in current. The metal layer may include, for example, copper (Cu), stainless steel, titanium (Ti), iron (Fe), cobalt (Co), nickel (Ni), or an alloy thereof. The negative electrode current collector 21 may further include a metal chip and/or a lead tab. More specific details regarding the base film, metal layer, metal chip, and lead tab of the negative electrode current collector 21 are described above with reference to the positive electrode current collector 11. As the negative electrode current collector 21 has such a structure, a weight of the negative electrode may be reduced, and consequently an energy density of the negative electrode and the lithium battery may be improved.

### [Solid Electrolyte Layer]

### [Solid Electrolyte Layer: Solid Electrolyte]

Referring to FIGS. 1 to 12, the all-solid-state secondary battery 1 includes a solid electrolyte layer 30 disposed between the positive electrode layer 10 and the negative electrode layer 20. The solid electrolyte layer 30 includes, for example, a solid electrolyte, or a combination of a solid electrolyte and a gel electrolyte.

The solid electrolyte may include, for example, a sulfide-based solid electrolyte, an oxide-based solid electrolyte, a polymer solid electrolyte, or a combination thereof.

The solid electrolyte is, for example, a sulfide-based solid electrolyte. More specific details regarding the sulfide-based solid electrolyte are described above with reference to the positive electrode active material layer 12. The sulfide-based solid electrolyte of the solid electrolyte layer 20 may be selected from among the sulfide-based solid electrolytes used in the positive electrode active material layer 12 described above.

The oxide-based solid electrolyte may be, for example, Li_{1+x+y}AlₓTi₂₋ₓSi_{y}P_{3-y}O₁₂ (0<x<2, 0≤y<3), BaTiO₃, Pb(Zr,Ti)O₃ (PZT), Pb₁₋ₓLaₓZr_{1-y}TiyO3 (PLZT) (0≤x<1, 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2, 0<y<3), LiₓAl_{y}Ti_{z}(PO₄)₃ (0<x<2, 0<y<1, 0<z<3), Li_{1+x+y}(Al, Ga)ₓ(Ti, Ge)₂₋ₓSi_{y}P_{3-y}O₁₂ (0≤x≤1, 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (M = Te, Nb, or Zr, 0≤x≤10), or a combination thereof. The oxide-based solid electrolyte is prepared, for example, by a sintering method or the like.

The oxide-based solid electrolyte is, for example, a Garnet-type solid electrolyte selected from among Li₇La₃Zr₂O₁₂ (LLZO) and Li₃₊ₓLa₃Zr₂₋ₐMₐO₁₂ (M doped LLZO, M=Ga, W, Nb, Ta, or Al, 0<a<2, 0≤x≤10).

The polymer solid electrolyte may include, for example, a mixture of a lithium salt and a polymer, or a polymer having an ion conductive functional group. The polymer solid electrolyte may be, for example, a polymer electrolyte in a solid state at 25 °C and 1 atm. The polymer solid electrolyte, for example, may not include a liquid. The polymer solid electrolyte includes a polymer, and the polymer may be, for example, polyethylene oxide (PEO), polyvinylidene fluoride (PVDF), vinylidene fluoride-hexafluoropropylene (PVDF-HFP), polyethylene oxide (PEO), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi+), or a combination thereof, but is not limited thereto, and any material used as a polymer electrolyte in the art may be used. The lithium salt may be any material that may be used as a lithium salt in the art. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (x and y are each independently 1 to 20), LiCl, LiI, or a mixture thereof. The polymer included in the polymer solid electrolyte may be, for example, a compound including 10 or more, 20 or more, 50 or more, or 100 or more repeating units. The weight average molecular weight of the polymer included in the polymer solid electrolyte may be, for example, 1000 Dalton or more, 10,000 Dalton or more, 100,000 Dalton or more, or 1,000,000 Dalton or more.

The gel electrolyte is, for example, a polymer gel electrolyte. The gel electrolyte, for example, may have a gel state without including a polymer.

The polymer gel electrolyte may include, for example, a liquid electrolyte and a polymer, or an organic solvent and a polymer having an ion conductive functional group. The polymer gel electrolyte may be, for example, a polymer electrolyte in a gel state at 25 °C and 1 atm. The polymer gel electrolyte, for example, may have a gel state without including a liquid. The liquid electrolyte used in the polymer gel electrolyte may be, for example, an ionic liquid, a mixture of a lithium salt and an organic solvent; a mixture of a lithium salt and an organic solvent; a mixture of an ionic liquid and an organic solvent; or a mixture of a lithium salt, an ionic liquid, and an organic solvent. The polymer used in the polymer gel electrolyte may be selected from among the polymers used in the polymer solid electrolyte. The organic solvent may be selected from among the organic solvents used in the liquid electrolyte. The organic solvent may be, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof. The lithium salt may be selected from among the lithium salts used in the polymer solid electrolyte. The ionic liquid refers to a salt or room temperature molten salt having a melting point of room temperature or lower, consisting only of ions, and being in a liquid state at room temperature. The ionic liquid may include, for example, one or more selected from among compounds including a) one or more cations selected from among ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based cations, and mixtures thereof, and b) one or more anions selected from among BF4-, PF6-, AsF6-, SbF6-, AlCl4-, HSO4-, ClO4-, CH3SO3-, CF3CO2-, Cl-, Br-, I-, BF4-, SO4-, CF3SO3-, (FSO2)2N-, (C2F5SO2)2N-, (C2F5SO2)(CF3SO2)N-, and (CF3SO2)2N-. The polymer solid electrolyte, for example, may form a polymer gel electrolyte by being impregnated with a liquid electrolyte in the secondary battery. The polymer gel electrolyte may further include inorganic particles. The polymer included in the polymer gel electrolyte may be, for example, a compound including 10 or more, 20 or more, 50 or more, or 100 or more repeating units. The weight average molecular weight of the polymer included in the polymer gel electrolyte may be, for example, 500 Dalton or more, 1000 Dalton or more, 10,000 Dalton or more, 100,000 Dalton or more, or 1,000,000 Dalton or more.

### [Solid Electrolyte Layer: Binder]

The solid electrolyte layer 30 may include, for example, a binder. The binder included in the solid electrolyte layer 30 may be, for example, styrene butadiene rubber (SBR), polytetrafluoroethylene, polyvinylidene fluoride, polyethylene, or the like, but is not limited thereto, and any material used as a binder in the art may be used. The binder of the solid electrolyte layer 30 may be the same as or different from the binder included in the positive electrode active material layer 12 and the negative electrode active material layer 22. The binder may be omitted.

The content of the binder included in the solid electrolyte layer 30 is, for example, 0.1 to 10 wt%, 0.1 to 5 wt%, 0.1 to 3 wt%, 0.1 to 1 wt%, 0 to 0.5 wt%, or 0 to 0.1 wt% based on the total weight of the solid electrolyte layer 30.

### Mode for the Invention

The following Examples and Comparative Examples more specifically describe the present creative idea. However, the Examples are only for illustrating the present creative idea, and the scope of the present creative idea is not limited thereto.

### (Preparation of Inorganic Filler)

### Preparation Example 1: Preparation of LiAlO₀.₇₅Cl₂.₅

Lithium chloride (LiCl) and aluminium trichloride (AlCl₃) were mixed and heated at 200 °C to prepare lithium tetrachloroaluminate (LiAlCl₄).

A small amount of metallic Al chips was added to the molten lithium tetrachloroaluminate to remove impurities.

Lithium tetrachloroaluminate (LiAlCl₄) and Sb₂O₃ were mixed at a molar ratio of 4:1 and heated at 250 °C for 2 hours under an argon atmosphere to remove volatilized SbCl₃ gas, thereby preparing a LiAlO_{0.}7₅Cl_{2.5} inorganic filler.

The ionic conductivity of the LiAlO_{0.}7₅Cl_{2.5} (LACO) inorganic filler measured at 25 °C and 1 atm by AC impedance was about 1 mS/cm. The amplitude voltage used for the AC impedance was 50 mV, and the frequency range was 1 MHz to 1 Hz. The LiAlO₀.₇₅Cl_{2.5} inorganic filler was amorphous and glassy having a glass transition temperature. Since no crystalline peak appeared in the XRD spectrum of the LiAlO₀.₇₅Cl_{2.5} inorganic filler, it was confirmed to be an amorphous phase. The melting temperature (Tm) of the LiAlO₀.₇₅Cl_{2.5} inorganic filler was about 128 °C at 1 atm. The melting temperature of the LiAlO₀.₇₅Cl_{2.5} inorganic filler was measured using a Differential Scanning Calorimeter (DSC). The glass transition temperature of the LiAlO₀.₇₅Cl_{2.5} inorganic filler was about -17 °C at 1 atm. The elastic modulus of the LiAlO₀.₇₅Cl_{2.5} inorganic filler was about 1.5 GPa at 30 °C. The glass transition temperature and elastic modulus of the LiAlO₀.₇₅Cl_{2.5} inorganic filler were measured using a Dynamic Mechanical Analyzer (DMA). The viscoelastic creep rate of the LiAlO₀.₇₅Cl_{2.5} inorganic filler was 4×10-4 %/s. The viscoelastic creep rate was measured using a Universal Test Machine (UTM).

### (Preparation of Solid Separator)

### Preparation Example 2: Preparation of Solid Separator

The LiAlO₀.₇₅Cl_{2.5} inorganic filler prepared in Preparation Example 1 was heated to prepare the inorganic filler in a liquid state.

The inorganic filler in a liquid state was injected into a porous membrane having a polypropylene/polyethylene/polypropylene three-layer structure and then cooled to room temperature to prepare a solid separator.

The thickness of the porous membrane was about 20 µm. The porosity of the porous membrane was about 50 %. The melting temperature of the porous membrane was about 135 °C.

The solid separator had a structure in which the LiAlO₀.₇₅Cl₂.₅ inorganic filler was impregnated into the porous membrane.

In the solid separator, the inorganic filler was disposed within pores of the porous membrane. During cooling of the inorganic filler in a liquid state, the inorganic filler in a solid state was obtained.

The shape of the inorganic filler conformed to the shape of the pores. The pores served as a mold (or matrix) determining the shape of the inorganic filler.

The surface profile of the inorganic filler conformed to the surface profile of the pores.

### (Preparation of Sulfide-Based Composite Positive electrode Active Material)

### Preparation Example 3: Li₂S-LiI-CNF Composite Positive electrode Active Material

Li₂S and LiI were mixed at a weight ratio of 30:20. The mixture was mechanically milled using a ball mill to prepare a Li2S-LiI composite. The milling conditions were 25 °C and 510 rpm for 10 hours.

The Li₂S-LiI composite and carbon nanofibers (CNF) were mixed at a weight ratio of 50:10. The mixture was mechanically milled using a ball mill to prepare a Li₂S-LiI-CNF composite. The milling conditions were 25 °C and 510 rpm for 10 hours. The Li₂S-LiI-CNF composite was used as a composite positive electrode active material.

### (Preparation of All-Solid-State Secondary Battery)

Example 1: Carbon-coated Al positive electrode current collector/ Li₆PS₅Cl+LACO (14:1) and NCM positive electrode active material layer/ LACO solid separator/ Li₆PS₅Cl solid electrolyte layer/ Ag-C negative electrode layer

### (Preparation of Positive electrode Layer)

LiNi₀.₈Co₀.₁₅Al₀.₀₅O₂ (NCM) coated with Li₂O-ZrO₂ (LZO) was prepared as a positive electrode active material. The LZO-coated NCM was prepared according to the method disclosed in Korean Patent Publication No. 10-2016-0064942. Li₆PS₅Cl (D50 = 0.5 µm, crystalline), which is an argyrodite-type crystal, was prepared as a solid electrolyte. LiAlO₀.₇₅Cl_{2.5} prepared in Preparation Example 1 was prepared as an inorganic filler. A polytetrafluoroethylene (PTFE) binder was prepared as a binder. Amorphous carbon nanotubes (CNT) were prepared as a conductive material. These materials were mixed with a xylene solvent at a weight ratio of positive electrode active material: solid electrolyte: inorganic filler: conductive material: binder = 85:14:1:3:2 to prepare a slurry, and the slurry was formed into a sheet form and then vacuum-dried at 40 °C for 8 hours to prepare a positive electrode sheet. The prepared positive electrode sheet was disposed on a carbon layer of a positive electrode current collector, which consists of an aluminium foil having the carbon layer coated on one surface thereof and heated roll-pressed at 85 °C to prepare a positive electrode layer. The total thickness of the positive electrode layer was about 112 µm. The thickness of the carbon-coated aluminium foil was about 20 µm. The thickness of the carbon layer was about 1 µm.

The elastic modulus of Li₆PS₅Cl was about 22 to 30 GPa at 30 °C. The elastic modulus of Li₆PS₅Cl was measured using a Dynamic Mechanical Analyzer (DMA).

### (Preparation of Negative electrode)

A SUS foil having a thickness of 10 µm was prepared as an negative electrode current collector. As a negative electrode active material, a mixture of carbon black (CB) having a primary particle diameter of 30 nm and silver (Ag) particles having an average particle diameter of about 60 nm at a weight ratio of 3:1 was prepared.

4 g of a mixture of carbon black (CB) and silver (Ag) was placed in a container, and 4 g of an NMP solution including 7 wt% of a PVDF binder (#9300 manufactured by Kureha) was added thereto to prepare a mixed solution. NMP was gradually added to the prepared mixed solution while stirring the mixed solution to prepare a slurry. The prepared slurry was coated on a SUS substrate using a bar coater, dried in air at 80 °C for 10 minutes, and then vacuum-dried at 40 °C for 10 hours to prepare a laminate. The prepared laminate was cold roll pressed to planarize the surface, thereby preparing a negative electrode having a first negative electrode active material layer/negative electrode current collector structure. The thickness of the first negative electrode active material layer was about 27 µm.

The ratio (B/A) of the initial charging capacity (B) of the first negative electrode active material layer to the initial charging capacity (A) of the positive electrode active material layer was less than 0.5. The initial charging capacity of the positive electrode active material layer was determined by charging from a 1st open circuit voltage to 4.25 V vs. Li/Li+. The initial charging capacity of the first negative electrode active material layer was determined by charging from a 2nd open circuit voltage to 0.01 V vs. Li/Li+.

### (Preparation of Solid Electrolyte Layer)

To Li₆PS₅Cl solid electrolyte (D₅₀ = 3.0 µm, crystalline), which is an argyrodite-type crystal, 1.5 parts by weight of an acrylic binder was added based on 98.5 parts by weight of the solid electrolyte to prepare a mixture. Octyl acetate was added to the prepared mixture while stirring to prepare a slurry. The prepared slurry was coated on a nonwoven fabric placed on a PET substrate using a bar coater and dried in air at 80 °C for 10 minutes to prepare a laminate. The prepared laminate was vacuum-dried at 80 °C for 2 hours to prepare a solid electrolyte layer.

### (Preparation of Solid Separator)

The solid separator prepared in Preparation Example 2 was used as-is.

### (Preparation of All-Solid-State Secondary Battery)

The solid electrolyte layer was disposed on the negative electrode such that the first negative electrode active material layer contacted the solid electrolyte layer, the solid separator was disposed on the solid electrolyte layer, and the positive electrode was disposed on the solid separator such that the positive electrode active material layer contacted the solid separator, thereby preparing a laminate.

The prepared laminate was plate pressed at 75 °C under a pressure of 500 MPa for 30 minutes. By this pressing treatment, the solid electrolyte layer was sintered, thereby improving battery characteristics. The thickness of the sintered solid electrolyte layer was about 20 µm. The density of the Li₆PS₅Cl solid electrolyte, which is an argyrodite-type crystal included in the sintered solid electrolyte layer, was 1.6 g/cc.

The pressed laminate was placed in a pouch and vacuum-sealed to prepare an all-solid-state secondary battery. Portions of the positive electrode current collector and the negative electrode current collector were extended outside the sealed battery and used as a positive electrode terminal and a negative electrode terminal.

Example 2: Carbon-coated Al positive electrode current collector/ Li₆PS₅Cl+LACO (14:1) and NCM positive electrode active material layer/ Li₆PS₅Cl solid electrolyte layer/ LACO solid separator/ Ag-C negative electrode layer

An all-solid-state secondary battery was prepared in the same manner as in Example 1, except that the solid separator was disposed between the solid electrolyte layer and the first negative electrode active material layer.

The thickness of the solid separator was about 20 µm.

Example 3: Carbon-coated Al positive electrode current collector/ Li₆PS₅Cl+LACO (14:1) and NCM positive electrode active material layer/ LACO solid separator/ Li₆PS₅Cl solid electrolyte layer/ LACO solid separator/ Ag-C negative electrode layer

An all-solid-state secondary battery was prepared in the same manner as in Example 1, except that the solid separators were respectively disposed between the solid electrolyte layer and the positive electrode layer and between the solid electrolyte layer and the first negative electrode active material layer.

The thicknesses of the solid separators were each about 20 µm.

Example 4: Carbon-coated Al/ Li₆PS₅Cl (15) and NCM/ LACO solid separator/ Li₆PS₅Cl solid electrolyte layer/ Ag-C negative electrode layer

An all-solid-state secondary battery was prepared in the same manner as in Example 1, except that the content ratio of the sulfide-based solid electrolyte and the inorganic filler in the positive electrode active material layer was changed from 14:1 to 15:0 (sulfide-based solid electrolyte alone).

Example 5: Carbon-coated Al/ Li₆PS₅Cl (15) and NCM/ Li₆PS₅Cl solid electrolyte layer/ LACO solid separator/ Ag-C negative electrode layer

An all-solid-state secondary battery was prepared in the same manner as in Example 1, except that the content ratio of the sulfide-based solid electrolyte and the inorganic filler in the positive electrode active material layer was changed from 14:1 to 15:0 (sulfide-based solid electrolyte alone).

Example 6: Carbon-coated Al/ Li₆PS₅Cl (15) and NCM/ LACO solid separator/ Li₆PS₅Cl solid electrolyte layer/ LACO solid separator/ Ag-C negative electrode layer

An all-solid-state secondary battery was prepared in the same manner as in Example 1, except that the content ratio of the sulfide-based solid electrolyte and the inorganic filler in the positive electrode active material layer was changed from 14:1 to 15:0 (sulfide-based solid electrolyte alone).

Example 7: bare Al/ Li₆PS₅Cl (15) and NCM/ LACO solid separator/ Li₆PS₅Cl solid electrolyte layer/ Ag-C negative electrode layer

An all-solid-state secondary battery was prepared in the same manner as in Example 1, except that an aluminium foil positive electrode current collector without a carbon coating layer was used, and the content ratio of the sulfide-based solid electrolyte and the inorganic filler in the positive electrode active material layer was changed from 14:1 to 15:0 (sulfide-based solid electrolyte alone).

### Comparative Example 1: bare Al/ Li₆PS₅Cl (15) and NCM/ Li₆PS₅Cl/ Ag-C negative electrode layer

An all-solid-state secondary battery was prepared in the same manner as in Example 1, except that an aluminium foil positive electrode current collector without a carbon coating layer was used, the content ratio of the sulfide-based solid electrolyte and the inorganic filler was changed from 14:1 to 15:0 (sulfide-based solid electrolyte alone), and the solid separator was omitted.

Example 8: Carbon-coated Al positive electrode current collector/ Li₆PS₅Cl+LACO (37:3) and Li2S-LiI-CNF positive electrode active material layer/ LACO solid separator/ Li₆PS₅Cl solid electrolyte layer/ Ag-C negative electrode layer

An all-solid-state secondary battery was prepared in the same manner as in Example 1, except that the following positive electrode including a sulfide-based positive electrode active material was used.

### (Positive Electrode Preparation)

A Li2S-LiI-CNF composite prepared in Preparation Example 3 was prepared as a positive electrode active material. Li₆PS₅Cl (D50 = 3.0 µm, crystalline), which is an argyrodite-type crystal, was prepared as a solid electrolyte. LiAlO₀.₇₅Cl₂.5 prepared in Preparation Example 1 was prepared as an inorganic filler. PTFE was prepared as a binder. These materials were mixed at a weight ratio of composite positive electrode active material: solid electrolyte: inorganic filler: binder = 60:37:3:1.2 to prepare a positive electrode mixture. The positive electrode mixture was obtained by mixing using a ball mill.

The positive electrode mixture was disposed on one surface of a positive electrode current collector, which consists of an aluminium foil carbon-coated on one surface and plate pressed at a pressure of 200 MPa for 10 minutes to prepare a positive electrode. The total thickness of the positive electrode layer was about 113.8 µm. The thickness of the positive electrode active material layer was about 93.8 µm, and the thickness of the carbon-coated aluminium foil was about 20 µm.

Example 9: carbon-coated Al positive electrode current collector/ Li₆PS₅Cl+LACO(37:3) and NCM positive electrode active material layer/ Li₆PS₅Cl solid electrolyte layer/ LACO solid separator/ Ag-C negative electrode layer

An all-solid-state secondary battery was prepared in the same manner as in Example 8, except that the solid separator was disposed between the solid electrolyte layer and the first negative electrode active material layer.

The thickness of the solid separator was about 20 µm.

Example 10: carbon-coated Al positive electrode current collector/ Li₆PS₅Cl+LACO(37:3) and NCM positive electrode active material layer/ LACO solid separator/ Li₆PS₅Cl solid electrolyte layer/ LACO solid separator/ Ag-C negative electrode layer

An all-solid-state secondary battery was prepared in the same manner as in Example 8, except that the solid separators were respectively disposed between the solid electrolyte layer and the positive electrode layer and between the solid electrolyte layer and the first negative electrode active material layer.

The thicknesses of the solid separators were each about 20 µm.

### Comparative Example 2: bare Al/ Li₆PS₅Cl(40) and Li2S-LiI-CNF/ Li₆PS₅Cl/ Ag-C negative electrode layer

An all-solid-state secondary battery was prepared in the same manner as in Example 8, except that an aluminium foil positive electrode current collector without a carbon coating layer was used, the content ratio of the sulfide-based solid electrolyte and the inorganic filler was changed from 37:3 to 40:0 (sulfide-based solid electrolyte alone), and the solid separator was omitted.

### Evaluation Example 1: Measurement of shutdown temperature

With respect to the all-solid-state secondary batteries of Examples 1 to 7 and Comparative Example 1, the impedance of the all-solid-state secondary batteries was measured while increasing the temperature from room temperature (that is, 25 °C) to 180 °C at a rate of 10 °C/min. A temperature at which the impedance of the all-solid-state secondary battery increased to 100 times the initial value was evaluated as the shutdown temperature.

In the all-solid-state secondary batteries of Examples 1 to 7, the shutdown temperature was 130 °C to 160 °C.

In contrast, the shutdown temperature of the all-solid-state secondary battery of Comparative Example 1 was not measured.

Accordingly, it was confirmed that the all-solid-state secondary batteries of Examples 1 to 7 may effectively block ignition due to thermal runaway and the like by the solid separator as compared with the all-solid-state secondary battery of Comparative Example 1.

### Evaluation Example 2: Charge/discharge test

Charge/discharge characteristics of the all-solid-state secondary batteries prepared in Examples 1 to 7 and Comparative Example 1 were evaluated by the following charge/discharge test. The charge/discharge test was performed by placing the all-solid-state secondary batteries in a constant-temperature chamber at 45 °C.

In the first cycle, charging was performed for 12.5 hours at a constant current of 0.1 C until the battery voltage reached 4.3 V. Subsequently, discharging was performed for 12.5 hours at a constant current of 0.1 C until the battery voltage reached 2.5 V.

The discharge capacity of the first cycle was defined as a standard capacity. The standard capacity was represented by the specific capacity of NCM in Table 1 below.

After the second cycle, charging and discharging were performed under the same conditions as in the first cycle up to 500 cycles. The measurement results are shown in Table 1 below.

The cycle number refers to the number of cycles required for the discharge capacity to decrease to 80 % of the standard capacity after the second cycle. As the cycle number increases, it was regarded as having superior lifespan characteristics.

### Evaluation Example 3: Evaluation of high-rate characteristics

High-rate characteristics of the all-solid-state secondary batteries of Examples 1 to 6 and Comparative Examples 1 to 3 were evaluated by the following charge/discharge test. The charge/discharge test was performed by placing the solid-state secondary batteries in a constant-temperature chamber at 45 °C.

The all-solid-state secondary battery was constant-current charged at 45 °C with a current at a 0.1 C rate until the voltage reached 4.3 V (vs. Li), and then cut off at a current at a 0.05 C rate while maintaining 4.3 V in a constant-voltage mode. Subsequently, during discharging, the battery was discharged at a constant current at a 0.1 C rate until the voltage reached 2.5 V (vs. Li) (formation cycle).

The all-solid-state secondary battery subjected to the formation cycle was constant-current charged at 45 °C with a current at a 0.2 C rate until the voltage reached 4.3 V (vs. Li). Subsequently, during discharging, the battery was discharged at a constant current at a 0.2 C rate until the voltage reached 2.5 V (vs. Li) (first cycle).

The all-solid-state secondary battery subjected to the first cycle was constant-current charged at 45 °C with a current at a 0.2 C rate until the voltage reached 4.3 V (vs. Li). Subsequently, during discharging, the battery was discharged at a constant current at a 0.33 C rate until the voltage reached 2.5 V (vs. Li) (second cycle).

The all-solid-state secondary battery subjected to the second cycle was constant-current charged at 45 °C with a current at a 0.2 C rate until the voltage reached 4.3 V (vs. Li). Subsequently, during discharging, the battery was discharged at a constant current at a 0.5 C rate until the voltage reached 2.5 V (vs. Li) (third cycle).

The all-solid-state secondary battery subjected to the third cycle was constant-current charged at 45 °C with a current at a 0.2 C rate until the voltage reached 4.3 V (vs. Li). Subsequently, during discharging, the battery was discharged at a constant current at a 1.0 C rate until the voltage reached 2.5 V (vs. Li) (fourth cycle).

In all charge/discharge cycles, a pause time of 10 minutes was provided after one charge/discharge cycle. Some of the room temperature charge/discharge test results are shown in Table 1 below. The high-rate characteristic is defined by Equation 1 below. <Equation 1> 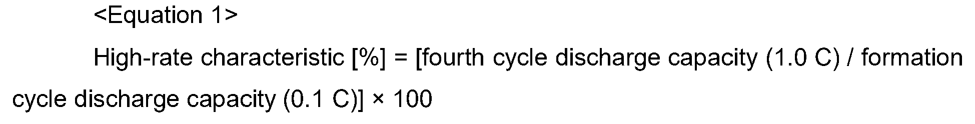 High-rate characteristic [%] = [fourth cycle discharge capacity (1.0 C) / formation cycle discharge capacity (0.1 C)] × 100

**[Table 1]**

| | Specific capacity [mAh/g] | Cycle number [times] | High-rate characteri stic [%] |
|---|---|---|---|
| Example 1: carbon-coated Al/ Li₆PS₅Cl+LACO(14:1) and NCM / solid separator/ Li₆PS₅Cl/Ag-C negative electrode layer | 188 | 250 | 88 |
| Example 2: carbon-coated Al/ Li₆PS₅Cl+LACO(14:1) and NCM / Li₆PS₅Cl/solid separator/Ag-C negative electrode layer | 184 | 182 | 85 |
| Example 3: carbon-coated Al/ Li₆PS₅Cl+LACO(14:1) and NCM/solid separator/Li₆PS₅Cl/solid separator/ Ag-C negative electrode layer | 182.5 | 151 | 82 |
| Comparative Example 1: bare Al/ Li₆PS₅Cl(15) and NCM/ Li₆PS₅Cl/ Ag-C negative electrode layer | 182 | 82 | 82 |

As shown in Table 1, the all-solid-state secondary batteries of Examples 1 to 7 exhibited improved charge/discharge characteristics as compared with the all-solid-state secondary battery of Comparative Example 1. The all-solid-state secondary batteries of Examples 1 to 3 exhibited excellent charge/discharge characteristics by including both the solid separator and the inorganic filler in the positive electrode active material layer. It was determined that the all-solid-state secondary battery of Example 1 exhibited improved charge/discharge characteristics as compared with the all-solid-state secondary batteries of Examples 2 to 3 due to improved stability and suppression of an increase in internal resistance.

Although not illustrated in Table 1, the all-solid-state secondary batteries of Examples 4 to 7 exhibited relatively poor charge/discharge characteristics as compared with the all-solid-state secondary batteries of Examples 1 to 3 due to not including the inorganic filler in the positive electrode active material layer.

The all-solid-state secondary battery of Comparative Example 1 exhibited deteriorated charge/discharge characteristics as compared with the all-solid-state secondary batteries of Examples 1 to 7 due to an increase in interfacial resistance caused by volume changes during charging/discharging because the solid separator was not included.

Although not illustrated in the drawings, it was confirmed that, in the all-solid-state secondary batteries of Examples 1 to 7, a lithium metal layer corresponding to the second negative electrode active material layer was formed between the first negative electrode active material layer and the negative electrode current collector after initial charging.

Formation of the lithium metal layer was confirmed through a cross-sectional scanning electron microscope image of the all-solid-state secondary battery.

### Evaluation Example 4: Charge/discharge test

Charge/discharge characteristics of the all-solid-state secondary batteries prepared in Examples 8 to 10 and Comparative Example 2 were evaluated by the following charge/discharge test. The charge/discharge test was performed by placing the all-solid-state secondary batteries in a constant-temperature chamber at 45 °C.

In the first cycle, charging was performed for 12.5 hours at a constant current of 0.1 C until the battery voltage reached 2.5 to 2.8 V. Subsequently, discharging was performed for 12.5 hours at a constant current of 0.1 C until the battery voltage reached 0.3 V.

The discharge capacity of the first cycle was defined as a standard capacity. The standard capacity was represented by the specific capacity of Li2S-LiI-CNF in Table 1 below.

After the second cycle, charging and discharging were performed under the same conditions as in the first cycle up to 500 cycles. The measurement results are shown in Table 2 below.

The cycle number refers to the number of cycles required for the discharge capacity to decrease to 80 % of the standard capacity after the second cycle. As the cycle number increases, it was regarded as having superior lifespan characteristics.

### Evaluation Example 5: Evaluation of high-rate characteristics

High-rate characteristics of the all-solid-state secondary batteries of Examples 8 to 10 and Comparative Examples 1 to 3 were evaluated by the following charge/discharge test. The charge/discharge test was performed by placing the solid-state secondary batteries in a constant-temperature chamber at 45 °C.

The all-solid-state secondary battery was constant-current charged at 45 °C with a current at a 0.1 C rate until the voltage reached 2.5 V (vs. Li), and then cut off at a current at a 0.05 C rate while maintaining 2.5 V in a constant-voltage mode. Subsequently, during discharging, the battery was discharged at a constant current at a 0.1 C rate until the voltage reached 0.3 V (vs. Li) (formation cycle).

The all-solid-state secondary battery subjected to the formation cycle was constant-current charged at 45 °C with a current at a 0.2 C rate until the voltage reached 2.5 V (vs. Li). Subsequently, during discharging, the battery was discharged at a constant current at a 0.2 C rate until the voltage reached 0.3 V (vs. Li) (first cycle).

The all-solid-state secondary battery subjected to the first cycle was constant-current charged at 45 °C with a current at a 0.2 C rate until the voltage reached 4.3 V (vs. Li). Subsequently, during discharging, the battery was discharged at a constant current at a 0.33 C rate until the voltage reached 2.5 V (vs. Li) (second cycle).

The all-solid-state secondary battery subjected to the second cycle was constant-current charged at 45 °C with a current at a 0.2 C rate until the voltage reached 2.5 V (vs. Li). Subsequently, during discharging, the battery was discharged at a constant current at a 0.5 C rate until the voltage reached 0.3 V (vs. Li) (third cycle).

The all-solid-state secondary battery subjected to the third cycle was constant-current charged at 45 °C with a current at a 0.2 C rate until the voltage reached 2.5 V (vs. Li). Subsequently, during discharging, the battery was discharged at a constant current at a 1.0 C rate until the voltage reached 0.3 V (vs. Li) (fourth cycle).

In all charge/discharge cycles, a pause time of 10 minutes was provided after one charge/discharge cycle. Some of the room temperature charge/discharge test results are shown in Table 1 below. The high-rate characteristic is defined by Equation 2 below. <Equation 1> 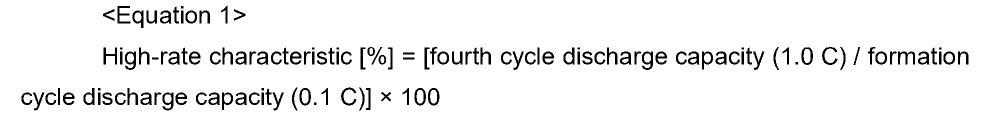 High-rate characteristic [%] = [fourth cycle discharge capacity (1.0 C) / formation cycle discharge capacity (0.1 C)] × 100

**[Table 2]**

| | Specific capacity [mAh/g] | Cycle number [times] | High-rate characteristic [%] |
|---|---|---|---|
| Example 8: carbon-coated Al/ Li₆PS₅Cl+LACO(37:3) and Li2S-LiI-CNF / solid separator/ Li₆PS₅Cl/Ag-C negative electrode layer | 920 | 450 | 89 |
| Example 9: carbon-coated Al/ Li₆PS₅Cl+LACO(37:3) and Li2S-LiI-CNF / Li₆PS₅Cl/solid separator/Ag-C negative electrode layer | 815 | 280 | 87 |
| Example 10: carbon-coated Al/ Li₆PS₅Cl+LACO(37:3) and Li2S-LiI-CNF /solid separator/Li₆PS₅Cl/solid separator/ Ag-C negative electrode layer | 810 | 250 | 85 |
| Comparative Example 2: bare Al/ Li₆PS₅Cl(40) and Li2S-LiI-CNF / Li₆PS₅Cl/ Ag-C negative electrode layer | 800 | 200 | 85 |

As shown in Table 1, the all-solid-state secondary batteries of Examples 8 to 10 exhibited improved charge/discharge characteristics as compared with the all-solid-state secondary battery of Comparative Example 2. The all-solid-state secondary batteries of Examples 8 to 10 exhibited excellent charge/discharge characteristics by including both the solid separator and the inorganic filler in the positive electrode active material layer.

It was determined that the all-solid-state secondary battery of Example 8 exhibited improved charge/discharge characteristics as compared with the all-solid-state secondary batteries of Examples 9 to 10 due to improved stability and suppression of an increase in internal resistance.

### List of Reference Numerals for Major Elements

| | | | |
|---|---|---|---|
| 1 | all-solid-state secondary battery | 10 | positive electrode |
| 11 | positive electrode current collector | 12 | positive electrode active material layer |
| 13 | interlayer | 20 | negative electrode |
| 21 | negative electrode current collector | 22 | first negative electrode active material layer |
| 23 | thin film | 24 | second negative electrode active material layer |
| 30 | electrolyte layer | 40, 40a, 40b | solid separator |
| 50 | inactive member | | |

### Industrial Applicability

According to an aspect, it is possible to provide an all-solid secondary battery having improved safety and charge/discharge characteristics by including a solid separator capable of preventing short circuit at high temperature and accommodating volume change during charging/discharging.

## Claims

1. An all-solid-state secondary battery comprising:
a positive electrode layer; a negative electrode layer; a solid electrolyte layer between the positive electrode layer and the negative electrode layer; and
a solid separator disposed in one or more of between the positive electrode layer and the solid electrolyte layer and between the negative electrode layer and the solid electrolyte layer,
wherein the positive electrode layer comprises a positive electrode current collector; and a positive electrode active material layer on one side or both sides of the positive electrode current collector,
wherein the positive electrode active material layer comprises a positive electrode active material and a first solid electrolyte,
wherein the solid separator comprises a porous membrane and an inorganic filler,
wherein the inorganic filler comprises a lithium metal oxyhalide represented by LiₐM_{b}O_{c}Cl_{d} (0<a≤3; 0<b≤3; 0<c≤3; 0<d≤8; c<d; a/(a+b+c+d)<0.5, and M is a metal selected from Group 3 to Group 15 of the periodic table of elements),
wherein the negative electrode layer comprises a negative electrode current collector and a first negative electrode active material layer on one side of the negative electrode current collector.

2. The all-solid-state secondary battery of claim 1, wherein the solid separator is liquid at 120 °C or higher.

3. The all-solid-state secondary battery of claim 1, wherein the porous membrane has a shutdown temperature of 100 °C or higher, and the porous membrane has a melting point exceeding 120 °C.

4. The all-solid-state secondary battery of claim 1, wherein the porous membrane is a flexible porous membrane, the porous membrane is an insulating porous membrane, the porous membrane is a flame-retardant porous membrane, and
the porous membrane has a thickness of 1 to 200 µm, and the porous membrane has a porosity of 20 to 99 %.

5. The all-solid-state secondary battery of claim 1, wherein the inorganic filler is impregnated into the porous membrane.

6. The all-solid-state secondary battery of claim 1, wherein the inorganic filler is disposed in pores of the porous membrane,
a shape of the inorganic filler conforms to a shape of the pores, and
a surface profile of the inorganic filler conforms to a surface profile of the pores.

7. The all-solid-state secondary battery of claim 1, wherein the inorganic filler is amorphous.

8. The all-solid-state secondary battery of claim 1, wherein the inorganic filler is glassy, the inorganic filler has a glass transition temperature of 20 °C or lower, and
the inorganic filler has a melting point of 100 °C or higher.

9. The all-solid-state secondary battery of claim 1, wherein the inorganic filler is an ion-conductive inorganic filler,
the inorganic filler has an ionic conductivity of 0.01 mS/cm or higher at 25 °C and 1 atm, and
the inorganic filler has an elastic modulus of 10 GPa or lower at 30 °C.

10. The all-solid-state secondary battery of claim 1, wherein the metal M of the lithium metal oxyhalide comprises Fe, Ga, In, As, Sb, Mo, Bi, B, or a combination thereof.

11. The all-solid-state secondary battery of claim 1, wherein the lithium metal oxyhalide comprises LiAl_{b}O_{c}Cl_{d} (0<b≤3; 0<c≤2; 0<d≤4; c<d; 1/(1+b+c+d)<0.5); LiFe_{b}O_{c}Cl_{d} (0<b≤3; 0<c≤2; 0<d≤4; c<d; 1/(1+b+c+d)<0.5); LiGa_{b}O_{c}Cl_{d} (0<b≤3; 0<c≤2; 0<d≤4; c<d; 1/(1+b+c+d)<0.5); LiIn_{b}O_{c}Cl_{d} (0<b≤3; 0<c≤2; 0<d≤4; c<d; 1/(1+b+c+d)<0.5); LiAs_{b}O_{c}Cl_{d} (0<b≤3; 0<c≤2; 0<d≤4; c<d; 1/(1+b+c+d)<0.5); LiSb_{b}O_{c}Cl_{d} (0<b≤3; 0<c≤2; 0<d≤4; c<d; 1/(1+b+c+d)<0.5); LiMo_{b}O_{c}Cl_{d} (0<b≤3; 0<c≤2; 0<d≤4; c<d; 1/(1+b+c+d)<0.5); LiBi_{b}O_{c}Cl_{d} (0<b≤3; 0<c≤2; 0<d≤4; c<d; 1/(1+b+c+d)<0.5); LiB_{b}O_{c}Cl_{d} (0<b≤3; 0<c≤2; 0<d≤4; c<d; 1/(1+b+c+d)<0.5); LiAl_{b-e}FeₑO_{c}Cl_{d} (0<b≤3; 0<c≤2; 0<d≤4; 0<e<b; c<d; 1/(1+b+c+d+e)<0.5); LiAl_{b-e}GaₑO_{c}Cl_{d} (0<b≤3; 0<c≤2; 0<d≤4; 0<e<b; c<d; 1/(1+b+c+d+e)<0.5); LiAl_{b-e}InₑO_{c}Cl_{d} (0<b≤3; 0<c≤2; 0<d≤4; 0<e<b; c<d; 1/(1+b+c+d+e)<0.5); LiAl_{b-e}AsₑO_{c}Cl_{d} (0<b≤3; 0<c≤2; 0<d≤4; 0<e<b; c<d; 1/(1+b+c+d+e)<0.5); LiAl_{b-e}SbₑO_{c}Cl_{d} (0<b≤3; 0<c≤2; 0<d≤4; 0<e<b; c<d; 1/(1+b+c+d+e)<0.5); LiAl_{b-e}MoₑO_{c}Cl_{d} (0<b≤3; 0<c≤2; 0<d≤4; 0<e<b; c<d; 1/(1+b+c+d+e)<0.5); LiAl_{b-e}BiₑO_{c}Cl_{d} (0<b≤3; 0<c≤2; 0<d≤4; 0<e<b; c<d; 1/(1+b+c+d+e)<0.5); LiAl_{b-e}BₑO_{c}Cl_{d} (0<b≤3; 0<c≤2; 0<d≤4; 0<e<b; c<d; 1/(1+b+c+d+e)<0.5), or a combination thereof.

12. The all-solid-state secondary battery of claim 1, wherein the positive electrode active material comprises an oxide-based positive electrode active material, a sulfide-based positive electrode active material, or a combination thereof,
the oxide-based positive electrode active material comprises a lithium transition metal oxide, a metal oxide, or a combination thereof, wherein the lithium transition metal oxide comprises lithium cobalt oxide, lithium nickel oxide, lithium nickel cobalt oxide, lithium nickel cobalt aluminium oxide, lithium nickel cobalt manganese oxide, lithium manganate, lithium iron phosphate, or a combination thereof, the metal oxide comprises iron oxide, vanadium oxide, or a combination thereof, and
the sulfide-based positive electrode active material comprises nickel sulfide, copper sulfide, Li₂S, a Li₂S-containing composite, or a combination thereof.

13. The all-solid-state secondary battery of claim 1, wherein the first solid electrolyte comprises a sulfide-based solid electrolyte,
the sulfide-based solid electrolyte comprises: one or more selected from Li₂S-P₂S₅; Li₂S-P₂S₅-LiX, wherein X is a halogen element; Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-LiI; Li₂S-SiS₂-P₂S₅-LiI; Li₂S-B₂S₃; Li₂S-P₂S₅-ZₘSₙ, wherein m and n are positive numbers and Z is one selected from Ge, Zn, and Ga; Li₂S-GeS₂; Li₂S-SiS₂-Li₃PO₄; Li₂S-SiS₂-LiₚMO_{q}, wherein p and q are positive numbers and M is one selected from P, Si, Ge, B, Al, and Ga In; Li₇₋ₓPS₆₋ₓClₓ, wherein 0≤x≤2; Li₇₋ₓPS₆₋ₓBrₓ, wherein 0≤x≤2; and Li₇₋ₓPS₆₋ₓIₓ, wherein 0≤x≤2,
the sulfide-based solid electrolyte comprises an argyrodite-type solid electrolyte,
the argyrodite-type solid electrolyte comprises one or more selected from Li₆PS₅Cl, Li₆PS₅Br, and Li₆PS₅I, and
the argyrodite-type solid electrolyte has a density of 1.5 to 2.0 g/cc.

14. The all-solid-state secondary battery of claim 1, wherein the positive electrode active material layer further comprises one or more selected from a conductive material and a binder,
the conductive material comprises a carbon-based material,
the carbon-based material is amorphous,
the carbon-based material comprises a fibrous carbon-based material,
the fibrous carbon-based material comprises a fibrous carbon nanostructure, and
the fibrous carbon nanostructure comprises carbon nanofibers, carbon nanotubes, carbon nanobelts, carbon nanorods, or a combination thereof.

15. The all-solid-state secondary battery of claim 1, further comprising an interlayer between the positive electrode current collector and the positive electrode active material layer,
wherein the interlayer comprises a carbon-based conductive material.

16. The all-solid-state secondary battery of claim 1, wherein the first negative electrode active material layer comprises a negative electrode active material and a binder,
the negative electrode active material has a particle form, and the negative electrode active material has an average particle diameter of 4 µm or less.

17. The all-solid-state secondary battery of claim 16, wherein the negative electrode active material comprises one or more selected from a carbon-based negative electrode active material and a metal or metalloid negative electrode active material,
the carbon-based negative electrode active material comprises amorphous carbon, crystalline carbon, porous carbon, or a combination thereof, and
the metal or metalloid negative electrode active material comprises Au, Pt, Pd, Si, Ag, Al, Bi, Sn, Zn, or a combination thereof.

18. The all-solid-state secondary battery of claim 16, wherein the negative electrode active material comprises a mixture of first particles consisting of amorphous carbon and second particles consisting of a metal or metalloid,
the second particles are present in an amount of 1 to 60 wt% based on the total weight of the mixture,
the all-solid-state secondary battery further comprises a second negative electrode active material layer disposed on one or more of between the negative electrode current collector and the first negative electrode active material layer and between the negative electrode current collector and the electrolyte layer, and
the second negative electrode active material layer is a metal layer, and the metal layer comprises lithium or a lithium alloy.

19. The all-solid-state secondary battery of claim 1, wherein the solid electrolyte layer comprises a solid electrolyte or a combination of a solid electrolyte and a gel electrolyte,
the solid electrolyte comprises a sulfide-based solid electrolyte, an oxide-based solid electrolyte, a polymer solid electrolyte, or a combination thereof, and
the gel electrolyte comprises a polymer gel electrolyte.

20. The all-solid-state secondary battery of claim 1, wherein one or more of the positive electrode current collector and the negative electrode current collector comprise a base film and a metal layer disposed on one side or both sides of the base film,
the base film comprises a polymer, wherein the polymer comprises polyethylene terephthalate (PET), polyethylene (PE), polypropylene (PP), polybutylene terephthalate (PBT), polyimide (PI), or a combination thereof, the metal layer comprises indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and
the all-solid-state secondary battery further comprises an inactive member disposed on one side surface of the positive electrode.
